# EUROPEAN PATENT APPLICATION

(11) **EP 3 444 977 A1**
(43) Date of publication of application: **20.02.2019**
(21) Application number: 16901215.0
(22) Date of filing: 09.05.2016
(51) Int. Cl.: H04L 1/00

(54) **DATA TRANSMISSION METHOD AND DEVICE**

(71) Applicant: Huawei Technologies Co., Ltd., Longgang District Shenzhen, Guangdong 518129 (CN)
(72) Inventor: QIN, Yiping, Shenzhen Guangdong 518129 (CN)
(74) Representative: Maiwald Patent- und Rechtsanwaltsgesellschaft mbH
(86) International application number: PCT/CN2016/081416
(87) International publication number: WO 2017/193260

(57) **Abstract**

Embodiments of the present invention provide a data transmission method. The method includes: obtaining, by a sending device, a first transport block size TBS, where a bit rate corresponding to the first TBS is greater than or equal to 1; obtaining, by the sending device, a second TBS from a pre-defined TBS set based on the first TBS, where an absolute value of a difference between the second TBS and the first TBS is the smallest in the pre-defined TBS set, or the second TBS is greater than or equal to the first TBS and a difference between the second TBS and the first TBS is the smallest in the pre-defined TBS set, or the second TBS is less than or equal to the first TBS and a difference between the second TBS and the first TBS is the smallest in the pre-defined TBS set; and obtaining, by the sending device, data in at least two different locations in a same code block based on the second TBS, and sending the data to a receiving device, so that the receiving device performs hybrid automatic repeat request HARQ combining and decoding on the data in the at least two different locations. The embodiments of the present invention further provide a data transmission apparatus. The embodiments of the present invention specifically have advantages of improving data transmission efficiency and spectrum efficiency of a data link.

## Description

### TECHNICAL FIELD

The present invention relates to the field of communications technologies, and in particular, to a data transmission method and an apparatus.

### BACKGROUND

Data transmission channels in a Long Term Evolution (Long Term Evolution, LTE) system include a physical uplink shared channel (Physical Uplink Shared Channel, PUSCH) carrying uplink data and a physical downlink shared channel (Physical Downlink Shared Channel, PDSCH) carrying downlink data. The PUSCH and the PDSCH transmit data by using adaptive modulation and coding (Adaptive Modulation and Coding, AMC) and hybrid automatic repeat request (Hybrid Automatic Repeat reQuest, HARQ) technologies. In the AMC, a proper modulation and coding scheme is selected based on a radio channel change, and during data transmission, different modulation schemes and bit rates are selected to adapt to data transmission in a scenario of desirable channel quality and data transmission in a scenario of poor channel quality, to ensure link transmission quality. The HARQ is responsible for ensuring a correct data transmission through data retransmission and combination when data is incorrectly transmitted.

In the prior art, in the AMC for data transmission on the PUSCH and the PDSCH, to ensure that data demodulation and decoding can be correctly performed at a relatively high probability in an initial data transmission, a relatively conservative bit rate is selected in a single data transmission and is usually slightly low and less than 1.0. In other words, a selected transport block size for a single data transmission is a transport block size corresponding to a bit rate less than 1.0. When data transmission bandwidth keeps unchanged, a lower data transmission bit rate indicates lower spectrum efficiency of a transmission link, and a higher data transmission bit rate indicates higher spectrum efficiency of the transmission link. If relatively high spectrum efficiency of a transmission link needs to be achieved, a gain of HARQ combining needs to be fully utilized, and a relatively high bit rate that even exceeds 1.0 is selected in an initial transmission.

### SUMMARY

This application provides a data transmission method and an apparatus, to improve a data transmission bit rate and spectrum efficiency of a transmission link.

According to a first aspect, a data transmission method is provided. The method may include:
obtaining, by a sending device, a first transport block size TBS, where a bit rate corresponding to the first TBS is greater than or equal to 1;
obtaining, by the sending device, a second TBS from a pre-defined TBS set based on the first TBS, where an absolute value of a difference between the second TBS and the first TBS is the smallest in the pre-defined TBS set, or the second TBS is greater than or equal to the first TBS and a difference between the second TBS and the first TBS is the smallest in the pre-defined TBS set, or the second TBS is less than or equal to the first TBS and a difference between the second TBS and the first TBS is the smallest in the pre-defined TBS set; and
obtaining, by the sending device, data in at least two different locations in a same code block based on the second TBS, and sending the data to a receiving device, so that the receiving device performs hybrid automatic repeat request HARQ combining and decoding on the data in the at least two different locations.

In the method provided in this application, the sending device may obtain the second TBS based on the first TBS whose bit rate is greater than or equal to 1. The absolute value of the difference between the second TBS and the first TBS is the smallest in the pre-defined TBS set, or the second TBS is greater than or equal to the first TBS and the difference between the second TBS and the first TBS is the smallest in the pre-defined TBS set, or the second TBS is less than or equal to the first TBS and the difference between the second TBS and the first TBS is the smallest in the pre-defined TBS set. Therefore, it can be ensured that a bit rate of the second TBS is also greater than or equal to 1. In this case, the sending device may obtain the data in the different locations in the same code block based on the second TBS whose bit rate is greater than or equal to 1, and send the data to the receiving device, so that the receiving device performs HARQ combining and decoding based on the data in the different locations in the same code block. In this application, data may be transmitted by using a TBS corresponding to a bit rate greater than or equal to 1. This can improve a data transmission bit rate and spectrum efficiency of a data transmission link.

With reference to the first aspect, in a first possible implementation, the sending device is a base station, and the receiving device is user equipment UE; and
the obtaining, by a sending device, a first TBS includes:
calculating, by the base station, the first TBS based on a pre-defined data transmission bit rate and a quantity of to-be-scheduled resource blocks RBs, where
the pre-defined data transmission bit rate is the bit rate corresponding to the first TBS.

In the method provided in this application, a data transmission bit rate may be self-defined, and a corresponding TBS, namely, the first TBS for data transmission may be determined based on the pre-defined data transmission bit rate and the quantity of to-be-scheduled RBs. Therefore, a data transmission bit rate is selected more flexibly, and data transmission efficiency and spectrum efficiency of a data transmission link can be better controlled.

With reference to the first aspect, in a second possible implementation, the sending device is a base station, and the receiving device is UE; and
the obtaining, by a sending device, a first TBS includes:
searching, by the base station, a pre-defined TBS lookup table for a target TBS based on a modulation and coding scheme MCS index for data transmission and a quantity of to-be-scheduled RBs, where a bit rate corresponding to the target TBS is less than 1; and
increasing, by the base station, the target TBS to N times the size of the target TBS to obtain the first TBS, where N is a positive real number that makes the bit rate corresponding to the first TBS greater than or equal to 1.

In the method provided in this application, the pre-defined TBS lookup table may be searched for the target TBS based on the MCS index for data transmission and the quantity of to-be-scheduled RBs. The target TBS corresponding to a bit stream less than 1 may be increased to obtain an increased first TBS, where the bit rate corresponding to the first TBS is greater than or equal to 1. The pre-defined TBS lookup table may be a table specified in the 3GPP standard protocol, enables data transmission performed by using a TBS whose bit rate is greater than or equal to 1 to be better controlled, and expands the applicability of the method described in this application.

With reference to the first aspect, in a third possible implementation, the sending device is UE, and the receiving device is a base station; and
the obtaining, by a sending device, a first TBS includes:
receiving, by the UE, scheduling information of the base station; and
obtaining, by the UE, the first TBS based on the scheduling information.

In the method described in this application, when the sending device is UE and the receiving device is a base station, the UE may determine, based on the scheduling information of the base station, the first TBS used to perform data transmission, and the base station may control selection of a TBS in data transmission, to ensure TBS consistency between the receiving device and the sending device in data transmission, and improve a data transmission success rate.

With reference to the third possible implementation of the first aspect, in a fourth possible implementation, the scheduling information carries a pre-defined data transmission bit rate and a quantity of to-be-scheduled RBs; and
the obtaining, by the UE, the first TBS based on the scheduling information includes:
calculating, by the UE, the first TBS based on the pre-defined bit rate and the quantity of RBs.

In the method described in this application, when UE is used as the sending device, the UE may calculate the first TBS based on the pre-defined data transmission bit rate and the quantity of to-be-scheduled RBs that are carried in the scheduling information of the base station. Therefore, TBS consistency between the sending device and the receiving device is ensured, a data transmission bit rate is selected more flexibly, and data transmission efficiency and spectrum efficiency of a data transmission link can be better controlled.

With reference to the third possible implementation of the first aspect, in a fifth possible implementation, the scheduling information carries an MCS index for data transmission and a quantity of to-be-scheduled RBs; and
the obtaining, by the UE, the first TBS based on the scheduling information includes:
searching, by the UE, a pre-defined TBS lookup table for a target TBS based on the MCS index and the quantity of to-be-scheduled RBs, where a bit rate corresponding to the target TBS is less than 1; and
increasing, by the UE, the target TBS to N times the size of the target TBS to obtain the first TBS, where N is a positive real number that makes the bit rate corresponding to the first TBS greater than or equal to 1.

In the method provided in this application, when UE is used as the sending device, the UE may calculate the first TBS based on the MCS index and the quantity of to-be-scheduled RBs that are carried in the scheduling information of the base station. This ensures TBS consistency between the sending device and the receiving device, enables data transmission performed by using a TBS whose bit rate is greater than or equal to 1 to be better controlled, and expands the applicability of the method described in this application.

With reference to any one of the first aspect to the fifth possible implementation of the first aspect, in a sixth possible implementation, the obtaining, by the sending device, data in at least two different locations in a code block based on the second TBS, and sending the data to a receiving device includes:
determining, by the sending device based on the second TBS and a size of the scheduled data of the code block, a quantity of transmission times that is required to transmit the code block to the receiving device based on the second TBS, where the quantity of transmission times is greater than 1;
determining, by the sending device based on the size of the data of the code block and the quantity of transmission times, a redundancy version used in each transmission;
determining, by the sending device based on the redundancy version used in each transmission, a location that is of data to be transmitted each time and that is in the code block;
obtaining, by the sending device based on the location that is of the data to be transmitted each time and that is in the code block, the data to be transmitted each time; and
sending, by the sending device to the receiving device, the data to be transmitted each time.

In the method provided in this application, the sending device may determine, based on the second TBS and the size of the scheduled data of the code block, the quantity of transmission times that the code block is transmitted, determine, based on the size of the data of the code block and the quantity of transmission times, the redundancy version used in data transmission and the location that is of the data to be transmitted and that is in the code block, obtain data in different locations in the code block that are corresponding to redundancy versions, and send the data to the receiving device. This can ensure that the data in the different locations in the code block is completely transmitted in data transmission, and improve a success rate of performing combining and decoding by the receiving device on the data.

With reference to the third possible implementation of the first aspect, in a seventh possible implementation, the sending device is UE, and the receiving device is a base station; and
the receiving, by the UE, scheduling information of the base station includes:
continually receiving, by the UE, M pieces of scheduling information of the base station within a preset time interval, where
the M pieces of scheduling information are scheduling information that is sent to the UE by the base station after the base station determines, based on the second TBS and a size of the scheduled data of the code block, a quantity M of scheduling times that is required to schedule the data of the code block based on the second TBS, and M is greater than 1.

In the method provided in this application, when UE is used as the sending device and a base station is used as the receiving device, the UE may continually receive the plurality of pieces of scheduling information of the base station within the preset time interval, to transmit data based on the scheduling information. This can reduce a data transmission delay and improve data transmission efficiency.

With reference to any one of the first aspect to the seventh possible implementation of the first aspect, in an eighth possible implementation,
a frame structure used for data transmission between the sending device and the receiving device is a frame structure having a short transmission time interval short TTI, where
in the frame structure having a short TTI, a quantity of symbols included in each TTI is any one of 1, 2, 3, 4, or 7.

In the method provided in this application, data transmission may be performed between the receiving device and the sending device by using the frame structure having a short TTI, to reduce a data transmission delay and improve data transmission efficiency.

With reference to the fifth possible implementation of the first aspect, in a ninth possible implementation, the increasing, by the UE, the target TBS to N times the size of the target TBS to obtain the first TBS includes:
multiplying the target TBS by N to obtain an N-fold value of the target TBS, and rounding the N-fold value of the target TBS to obtain the first TBS, where
rounding the N-fold value of the target TBS includes any rounding manner of rounding up to the nearest integer, rounding down to the nearest integer, or rounding off; and
the target TBS is corresponding to a first bit rate, the second TBS is corresponding to a second bit rate, and the second bit rate is N times of the target bit rate.

In the method provided in this application, when increasing the found target TBS, the UE may multiply the target TBS by N and perform rounding. There may be a plurality of rounding manners, thereby making increase operations of the target TBS more diversified. In addition, performing rounding after the increase can improve operation convenience of searching for the second TBS based on the first TBS, and improve data transmission efficiency.

According to a second aspect, a data transmission method is provided. The method may include:
receiving, by a receiving device, data of a same code block that is sent by a sending device at least twice based on a second transport block size TBS, where the data of the same code block that is sent at least twice is data in different locations in the code block, and the second TBS is obtained from a pre-defined TBS set based on a first TBS corresponding to a bit rate greater than or equal to 1; and
performing, by the receiving device, hybrid automatic repeat request HARQ combining and decoding on the received data in the different locations in the code block.

In the method provided in this application, the receiving device may receive the data in the different locations in the same code block that is sent by the sending device based on the second TBS corresponding to a bit stream greater than or equal to 1, so as to improve data transmission efficiency. The receiving device may further perform HARQ combining and decoding on the data in the different locations in the same code block, so as to improve accuracy of decoding the data of the code block in data transmission.

With reference to the second aspect, in a first possible implementation, after the receiving, by a receiving device, data of a same code block that is sent by a sending device at least twice based on a second TBS, the method further includes:
feeding back, by the receiving device, a receiving status of the data of the code block to the sending device in a preset feedback manner, where
the feedback manner includes at least one of the following: performing feedback once after data is received each time, and performing feedback once after data is received for K times; and
K is a natural number greater than 1 and not greater than M.

In the method provided in this application, after receiving the data sent by the sending device, the receiving device may further perform feedback based on a plurality of feedback manners, so as to make data feedback manners more diversified. If the receiving device uses the feedback manner of performing feedback once after receiving data for a plurality of times, data transmission signaling and data transmission power consumption can be further reduced.

With reference to the second aspect or the first possible implementation of the second aspect, in a second possible implementation,
the receiving device is a base station, and the sending device is UE; and
before the receiving, by a receiving device, data of a same code block that is sent by a sending device at least twice based on a second TBS, the method further includes:
calculating, by the base station, the first TBS, and obtaining the second TBS from the pre-defined TBS set based on the first TBS, where an absolute value of a difference between the second TBS and the first TBS is the smallest in the pre-defined TBS set, or the second TBS is greater than the first TBS and a difference between the second TBS and the first TBS is the smallest in the pre-defined TBS set, or the second TBS is less than the first TBS and a difference between the second TBS and the first TBS is the smallest in the pre-defined TBS set; and
determining, by the base station based on the second TBS and a size of the scheduled data of the code block, a quantity M of scheduling times that is required to schedule the data of the code block based on the second TBS, and continually sending M pieces of scheduling information to the UE within a preset time interval.

In the method provided in this application, when a base station is used as the receiving device, and UE is used as the sending device, the base station may determine a TBS for data transmission and a quantity of data transmission times, and may send a plurality of pieces of scheduling information to the UE within the preset time interval. This reduces a data transmission delay while ensuring TBS consistency between the receiving device and the sending device in data transmission, and improves data transmission efficiency.

With reference to the second possible implementation of the second aspect, in a third possible implementation, the calculating, by the base station, the first TBS includes:
calculating, by the base station, the first TBS based on a pre-defined data transmission bit rate and a quantity of to-be-scheduled resource blocks RBs, where the pre-defined data transmission bit rate is the bit rate corresponding to the first TBS; or
searching, by the base station, a pre-defined TBS lookup table for a target TBS based on a modulation and coding scheme MCS index for data transmission and a quantity of to-be-scheduled RBs, and increasing the target TBS to N times the size of the target TBS to obtain the first TBS, where a bit rate corresponding to the target TBS is less than 1, and N is a positive real number that makes the bit rate corresponding to the first TBS greater than or equal to 1.

In the method provided in this application, when a base station is used as the receiving device, and UE is used as the sending device, the base station may determine, in a plurality of manners, the first TBS for data transmission. This makes manners of obtaining a TBS for data transmission more diversified, improves applicability of transmitting data by using a high bit rate, and improves data transmission efficiency and spectrum efficiency of a data transmission link.

With reference to the third possible implementation of the second aspect, in a fourth possible implementation, the scheduling information is used to trigger the UE to send the data of the code block to the base station, where
the scheduling information carries the quantity of to-be-scheduled RBs and at least one piece of the following information: the pre-defined data transmission bit rate and the MCS index for data transmission.

In the method provided in this application, the base station may send the pre-defined data transmission bit rate or the MCS index, and the quantity of to-be-scheduled RBs to the UE by using the scheduling information, to trigger the UE to send the data of the code block to the base station. This ensures TBS consistency between the receiving device and the sending device in data transmission, and improves data transmission accuracy.

With reference to any one of the second aspect to the fourth possible implementation of the second aspect, in a fifth possible implementation, a frame structure used for data transmission between the receiving device and the sending device is a frame structure having a short transmission time interval short TTI, where
in the frame structure having a short TTI, a quantity of symbols included in each TTI is any one of 1, 2, 3, 4, or 7.

According to a third aspect, a sending device for data transmission is provided. The sending device may include:
a first obtaining module, configured to obtain a first transport block size TBS, where a bit rate corresponding to the first TBS is greater than or equal to 1;
a second obtaining module, configured to obtain a second TBS from a pre-defined TBS set based on the first TBS obtained by the first obtaining module, where an absolute value of a difference between the second TBS and the first TBS is the smallest in the pre-defined TBS set, or the second TBS is greater than or equal to the first TBS and a difference between the second TBS and the first TBS is the smallest in the pre-defined TBS set, or the second TBS is less than or equal to the first TBS and a difference between the second TBS and the first TBS is the smallest in the pre-defined TBS set; and
a sending module, configured to: obtain data in at least two different locations in a same code block based on the second TBS obtained by the second obtaining module, and send the data to a receiving device, so that the receiving device performs hybrid automatic repeat request HARQ combining and decoding on the data in the at least two different locations.

With reference to the third aspect, in a first possible implementation, the sending device is a base station, and the receiving device is user equipment UE; and
the first obtaining module is specifically configured to:
calculate the first TBS based on a pre-defined data transmission bit rate and a quantity of to-be-scheduled resource blocks RBs, where
the pre-defined data transmission bit rate is the bit rate corresponding to the first TBS.

With reference to the third aspect, in a second possible implementation, the sending device is a base station, and the receiving device is UE; and
the first obtaining module is specifically configured to:
search a pre-defined TBS lookup table for a target TBS based on a modulation and coding scheme MCS index for data transmission and a quantity of to-be-scheduled RBs, where a bit rate corresponding to the target TBS is less than 1; and
increase the target TBS to N times the size of the target TBS to obtain the first TBS, where N is a positive real number that makes the bit rate corresponding to the first TBS greater than or equal to 1.

With reference to the third aspect, in a third possible implementation, the sending device is UE, and the receiving device is a base station; and
the first obtaining module is specifically configured to:
receive scheduling information of the base station, and obtain the first TBS based on the scheduling information.

With reference to the third possible implementation of the third aspect, in a fourth possible implementation, the scheduling information carries a pre-defined data transmission bit rate and a quantity of to-be-scheduled RBs; and
the first obtaining module is specifically configured to:
calculate the first TBS based on the pre-defined bit rate and the quantity of RBs.

With reference to the third possible implementation of the third aspect, in a fifth possible implementation, the scheduling information carries an MCS index for data transmission and a quantity of to-be-scheduled RBs; and
the first obtaining module is specifically configured to:
search a pre-defined TBS lookup table for a target TBS based on the MCS index and the quantity of to-be-scheduled RBs, where a bit rate corresponding to the target TBS is less than 1; and
increase the target TBS to N times the size of the target TBS to obtain the first TBS, where N is a positive real number that makes the bit rate corresponding to the first TBS greater than or equal to 1.

With reference to any one of the third aspect to the fifth possible implementation of the third aspect, in a sixth possible implementation, the sending module is specifically configured to:
determine, based on the second TBS and a size of the scheduled data of the code block, a quantity of transmission times that is required to transmit the code block to the receiving device based on the second TBS, where the quantity of transmission times is greater than 1;
determine, based on the size of the data of the code block and the quantity of transmission times, a redundancy version used in each transmission;
determine, based on the redundancy version used in each transmission, a location that is of data to be transmitted each time and that is in the code block;
obtain, based on the location that is of the data to be transmitted each time and that is in the code block, the data to be transmitted each time; and
send, to the receiving device, the data to be transmitted each time.

With reference to the third possible implementation of the third aspect, in a seventh possible implementation, the sending device is UE, and the receiving device is a base station; and the first obtaining module is specifically configured to:
continually receive M pieces of scheduling information of the base station within a preset time interval, where
the M pieces of scheduling information are scheduling information that is sent to the UE by the base station after the base station determines, based on the second TBS and a size of the scheduled data of the code block, a quantity M of scheduling times that is required to schedule the data of the code block based on the second TBS, and M is greater than 1.

With reference to any one of the third aspect to the seventh possible implementation of the third aspect, in an eighth possible implementation, a frame structure used for data transmission between the sending device and the receiving device is a frame structure having a short transmission time interval short TTI, where
in the frame structure having a short TTI, a quantity of symbols included in each TTI is any one of 1, 2, 3, 4, or 7.

With reference to the fifth possible implementation of the third aspect, in a ninth possible implementation, the first obtaining module is specifically configured to:
multiply the target TBS by N to obtain an N-fold value of the target TBS, and round the N-fold value of the target TBS to obtain the first TBS, where
rounding the N-fold value of the target TBS includes any rounding manner of rounding up to the nearest integer, rounding down to the nearest integer, or rounding off; and
the target TBS is corresponding to a first bit rate, the second TBS is corresponding to a second bit rate, and the second bit rate is N times of the target bit rate.

According to a fourth aspect, a receiving device for data transmission is provided. The receiving device may include:
a receiving module, configured to receive data of a same code block that is sent by a sending device at least twice based on a second transport block size TBS, where the data of the same code block that is sent at least twice is data in different locations in the code block, and the second TBS is obtained from a pre-defined TBS set based on a first TBS corresponding to a bit rate greater than or equal to 1; and
a decoding module, configured to perform hybrid automatic repeat request HARQ combining and decoding on the data that is in the different locations in the code block and that is received by the receiving module.

With reference to the fourth aspect, in a first possible implementation, the receiving device further includes:
a feedback module, configured to feed back a receiving status of receiving, by the receiving module, the data of the code block to the sending device in a preset feedback manner, where
the feedback manner includes at least one of the following: performing feedback once after data is received each time, and performing feedback once after data is received for K times; and
K is a natural number greater than 1 and not greater than M.

With reference to the fourth aspect or the first possible implementation of the fourth aspect, in a second possible implementation, the receiving device is a base station, and the sending device is UE; and
the receiving device further includes:
a scheduling module, configured to: calculate the first TBS, and obtain the second TBS from the pre-defined TBS set based on the first TBS, where an absolute value of a difference between the second TBS and the first TBS is the smallest in the pre-defined TBS set, or the second TBS is greater than the first TBS and a difference between the second TBS and the first TBS is the smallest in the pre-defined TBS set, or the second TBS is less than the first TBS and a difference between the second TBS and the first TBS is the smallest in the pre-defined TBS set; and
determine, based on the second TBS and a size of the scheduled data of the code block, a quantity M of scheduling times that is required to schedule the data of the code block based on the second TBS, and continually send M pieces of scheduling information to the UE within a preset time interval.

With reference to the second possible implementation of the fourth aspect, in a third possible implementation, the scheduling module is specifically configured to:
calculate the first TBS based on a pre-defined data transmission bit rate and a quantity of to-be-scheduled resource blocks RBs, where the pre-defined data transmission bit rate is the bit rate corresponding to the first TBS; or
search a pre-defined TBS lookup table for a target TBS based on a modulation and coding scheme MCS index for data transmission and a quantity of to-be-scheduled RBs, and increase the target TBS to N times the size of the target TBS to obtain the first TBS, where a bit rate corresponding to the target TBS is less than 1, and N is a positive real number that makes the bit rate corresponding to the first TBS greater than or equal to 1.

With reference to the third possible implementation of the fourth aspect, in a fourth possible implementation, the scheduling information is used to trigger the UE to send the data of the code block to the base station, where
the scheduling information carries the quantity of to-be-scheduled RBs and at least one piece of the following information: the pre-defined data transmission bit rate and the MCS index for data transmission.

With reference to any one of the fourth aspect to the fourth possible implementation of the fourth aspect, in a fifth possible implementation, a frame structure used for data transmission between the receiving device and the sending device is a frame structure having a short transmission time interval short TTI, where
in the frame structure having a short TTI, a quantity of symbols included in each TTI is any one of 1, 2, 3, 4, or 7.

According to a fifth aspect, a sending terminal is provided. The sending terminal may include: a memory, a processor, and a transmitter. The memory, the transmitter, and the processor are connected, where
the memory is configured to store a set of program code; and
the processor and the transmitter are configured to invoke the program code stored in the memory, to perform the following operations:
the processor is configured to obtain a first transport block size TBS, where a bit rate corresponding to the first TBS is greater than or equal to 1;
the processor is further configured to obtain, based on the first TBS, a second TBS from a pre-defined TBS set stored in the memory, where an absolute value of a difference between the second TBS and the first TBS is the smallest in the pre-defined TBS set, or the second TBS is greater than or equal to the first TBS and a difference between the second TBS and the first TBS is the smallest in the pre-defined TBS set, or the second TBS is less than or equal to the first TBS and a difference between the second TBS and the first TBS is the smallest in the pre-defined TBS set;
the processor is further configured to obtain data in at least two different locations in a same code block based on the second TBS; and
the transmitter is configured to send the data that is in the at least two different locations in the same code block and that is obtained by the processor to a receiving terminal, so that the receiving terminal performs hybrid automatic repeat request HARQ combining and decoding on the data in the at least two different locations.

With reference to the fifth aspect, in a first possible implementation, the sending terminal is a base station, and the receiving terminal is user equipment UE; and
the processor is specifically configured to:
calculate the first TBS based on a pre-defined data transmission bit rate and a quantity of to-be-scheduled resource blocks RBs that are stored in the memory, where
the pre-defined data transmission bit rate is the bit rate corresponding to the first TBS.

With reference to the fifth aspect, in a second possible implementation, the sending terminal is a base station, and the receiving terminal is UE; and
the processor is specifically configured to:
search a pre-defined TBS lookup table for a target TBS based on a modulation and coding scheme MCS index for data transmission and a quantity of to-be-scheduled RBs, where a bit rate corresponding to the target TBS is less than 1; and
increase the target TBS to N times the size of the target TBS to obtain the first TBS, where N is a positive real number that makes the bit rate corresponding to the first TBS greater than or equal to 1.

With reference to the fifth aspect, in a third possible implementation, the sending terminal is UE, and the receiving terminal is a base station; and
the processor is specifically configured to:
receive scheduling information of the base station, and obtain the first TBS based on the scheduling information.

With reference to the third possible implementation of the fifth aspect, in a fourth possible implementation, the scheduling information carries a pre-defined data transmission bit rate and a quantity of to-be-scheduled RBs; and
the processor is specifically configured to:
calculate the first TBS based on the pre-defined bit rate and the quantity of RBs.

With reference to the third possible implementation of the fifth aspect, in a fifth possible implementation, the scheduling information carries an MCS index for data transmission and a quantity of to-be-scheduled RBs; and
the processor is specifically configured to:
search a pre-defined TBS lookup table for a target TBS based on the MCS index and the quantity of to-be-scheduled RBs, where a bit rate corresponding to the target TBS is less than 1; and
increase the target TBS to N times the size of the target TBS to obtain the first TBS, where N is a positive real number that makes the bit rate corresponding to the first TBS greater than or equal to 1.

With reference to any one of the fifth aspect to the fifth possible implementation of the fifth aspect, in a sixth possible implementation, the processor is specifically configured to:
determine, based on the second TBS and a size of the scheduled data of the code block, a quantity of transmission times that is required to transmit the code block to the receiving terminal based on the second TBS, where the quantity of transmission times is greater than 1;
determine, based on the size of the data of the code block and the quantity of transmission times, a redundancy version used in each transmission;
determine, based on the redundancy version used in each transmission, a location that is of data to be transmitted each time and that is in the code block; and
obtain, based on the location that is of the data to be transmitted each time and that is in the code block, the data to be transmitted each time; and
the transmitter is specifically configured to:
   send the data to be transmitted each time that is obtained by the processor to the receiving terminal.

With reference to the third possible implementation of the fifth aspect, in a seventh possible implementation, the sending device is UE, and the receiving device is a base station; and
the processor is specifically configured to:
continually receive M pieces of scheduling information of the base station within a preset time interval, where
the M pieces of scheduling information are scheduling information that is sent to the UE by the base station after the base station determines, based on the second TBS and a size of the scheduled data of the code block, a quantity M of scheduling times that is required to schedule the data of the code block based on the second TBS, and M is greater than 1.

With reference to any one of the fifth aspect to the seventh possible implementation of the fifth aspect, in an eighth possible implementation, a frame structure used for data transmission between the sending terminal and the receiving terminal is a frame structure having a short transmission time interval short TTI, where
in the frame structure having a short TTI, a quantity of symbols included in each TTI is any one of 1, 2, 3, 4, or 7.

With reference to the fifth possible implementation of the fifth aspect, in a ninth possible implementation, the processor is specifically configured to:
multiply the target TBS by N to obtain an N-fold value of the target TBS, and round the N-fold value of the target TBS to obtain the first TBS, where
rounding the N-fold value of the target TBS includes any rounding manner of rounding up to the nearest integer, rounding down to the nearest integer, or rounding off; and
the target TBS is corresponding to a first bit rate, the second TBS is corresponding to a second bit rate, and the second bit rate is N times of the target bit rate.

According to a sixth aspect, a receiving terminal is provided. The receiving terminal may include: a memory, a receiver, and a processor. The memory, the receiver, and the processor are connected, where
the memory is configured to store a set of program code; and
the receiver and the processor are configured to invoke the program code stored in the memory, to perform the following operations:
the receiver is configured to receive data of a same code block that is sent by a sending terminal at least twice based on a second transport block size TBS, where the data of the same code block that is sent at least twice is data in different locations in the code block, and the second TBS is obtained from a pre-defined TBS set based on a first TBS corresponding to a bit rate greater than or equal to 1; and
the processor is configured to perform hybrid automatic repeat request HARQ combining and decoding on the data that is in the different locations in the code block and that is received by the receiver.

With reference to the sixth aspect, in a first possible implementation, the processor is further configured to:
feed back a receiving status of the data of the code block to the sending terminal in a preset feedback manner, where
the feedback manner includes at least one of the following: performing feedback once after data is received each time, and performing feedback once after data is received for K times; and
K is a natural number greater than 1 and not greater than M.

With reference to the sixth aspect or the first possible implementation of the sixth aspect, in a second possible implementation, the receiving terminal is a base station, and the sending terminal is UE; and
the processor is further configured to:
calculate the first TBS, and obtain the second TBS from the pre-defined TBS set based on the first TBS, where an absolute value of a difference between the second TBS and the first TBS is the smallest in the pre-defined TBS set, or the second TBS is greater than the first TBS and a difference between the second TBS and the first TBS is the smallest in the pre-defined TBS set, or the second TBS is less than the first TBS and a difference between the second TBS and the first TBS is the smallest in the pre-defined TBS set; and
determine, based on the second TBS and a size of the scheduled data of the code block, a quantity M of scheduling times that is required to schedule the data of the code block based on the second TBS, and continually send M pieces of scheduling information to the UE within a preset time interval.

With reference to the second possible implementation of the sixth aspect, in a third possible implementation, the processor is specifically configured to:
calculate the first TBS based on a pre-defined data transmission bit rate and a quantity of to-be-scheduled resource blocks RBs, where the pre-defined data transmission bit rate is the bit rate corresponding to the first TBS; or
search a pre-defined TBS lookup table for a target TBS based on a modulation and coding scheme MCS index for data transmission and a quantity of to-be-scheduled RBs, and increase the target TBS to N times the size of the target TBS to obtain the first TBS, where a bit rate corresponding to the target TBS is less than 1, and N is a positive real number that makes the bit rate corresponding to the first TBS greater than or equal to 1.

With reference to the third possible implementation of the sixth aspect, in a fourth possible implementation, the scheduling information is used to trigger the UE to send the data of the code block to the base station, where
the scheduling information carries the quantity of to-be-scheduled RBs and at least one piece of the following information: the pre-defined data transmission bit rate and the MCS index for data transmission.

With reference to any one of the sixth aspect to the fourth possible implementation of the sixth aspect, in a fifth possible implementation, a frame structure used for data transmission between the sending terminal and the receiving terminal is a frame structure having a short transmission time interval short TTI, where
in the frame structure having a short TTI, a quantity of symbols included in each TTI is any one of 1, 2, 3, 4, or 7.

According to a seventh aspect, a data transmission system is provided. The system may include: the foregoing sending terminal and the foregoing receiving terminal.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic flowchart of a data transmission method according to an embodiment of the present invention;
FIG. 2 is a schematic diagram of data exchange between a receiving device and a sending device in uplink data transmission;
FIG. 3 is a schematic flowchart of uplink data transmission according to an embodiment of the present invention;
FIG. 4 is a schematic structural diagram of an LTE timeslot;
FIG. 5 is a schematic diagram in which a receiving device performs combining and decoding on data of a code block;
FIG. 6 is a schematic diagram of an adaptive retransmission procedure in uplink data transmission;
FIG. 7 is a schematic diagram of comparison between retransmission feedback time sequences;
FIG. 8 is another schematic diagram of comparison between retransmission feedback time sequences;
FIG. 9 is another schematic flowchart of a data transmission method according to an embodiment of the present invention;
FIG. 10 is a schematic structural diagram of a sending device for data transmission according to an embodiment of the present invention;
FIG. 11 is a schematic structural diagram of a receiving device for data transmission according to an embodiment of the present invention;
FIG. 12 is another schematic structural diagram of a receiving device for data transmission according to an embodiment of the present invention;
FIG. 13 is another schematic structural diagram of a receiving device for data transmission according to an embodiment of the present invention;
FIG. 14 is a schematic structural diagram of a terminal according to an embodiment of the present invention;
FIG. 15 is another schematic structural diagram of a terminal according to an embodiment of the present invention; and
FIG. 16 is a schematic structural diagram of a data transmission system according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

In specific implementation, a data transmission bit rate described in the embodiments of the present invention is defined as a percentage of a quantity of bits of useful information that needs to be transmitted to a quantity of bits of data that can be transmitted by using an air interface. When other data transmission conditions do not change, a higher data transmission bit rate indicates higher spectrum efficiency of a transmission link, and a lower data transmission bit rate indicates lower spectrum efficiency of the transmission link. That a bit rate is less than 1.0 indicates that a quantity of bits of useful information that needs to be transmitted is less than a quantity of bits of data that can be transmitted by using an air interface. In data transmission, to ensure that a receiving device correctly decodes data sent by a sending device, the data transmitted by the sending device to the receiving device needs to include redundant data. Therefore, a bit rate selected by the sending device to transmit the data is less than 1.0. The redundant data may be used to correct an error that occurs when the transmitted data is demodulated and decoded by the receiving device, to better perform demodulation and decoding to obtain the data transmitted by an encoder. If the receiving device cannot correctly perform decoding to obtain the data sent by the sending device, the sending device needs to retransmit the data. In addition, when interference from a channel or a neighboring cell has an unpredictable fluctuation, a data transmission bit rate decreases to ensure a probability of a correct initial data transmission. As a result, spectrum efficiency of a transmission link is further reduced.

To avoid a spectrum efficiency loss, in a data transmission method described in the embodiments of the present invention, the sending device may select a high bit rate to transmit data. When a high bit rate is selected to transmit data, data of a same code block may be transmitted for a plurality of times, and an encoded bit that is in a different location in the same code block is transmitted each time. In other words, data in a different location in the same code block is transmitted each time, and transmission stops only after the receiving device correctly performs decoding. In the data transmission method described in the embodiments of the present invention, a bit rate in each data transmission corresponding to the same code block may exceed 1.0. That a bit rate exceeds 1.0 indicates that a data size that can be transmitted in a single transmission by using an air interface is less than a quantity of bits of useful information that needs to be transmitted. Data transmitted in a single transmission does not include redundant data, and the receiving device cannot correctly perform decoding based on the data transmitted in the single transmission. The receiving device may perform HARQ combining and decoding on the received data transmitted by the sending device for a plurality of times. An equivalent bit rate is less than 1.0 when different encoded bits are combined. A lower equivalent bit rate indicates that more redundant information is included, and vice versa. Therefore, an error can be corrected to obtain the data of the code block that is sent by the sending device. Retransmission can be performed in a case of an incorrect transmission, and a restriction that a probability of a correct initial transmission needs to be high does not exist. Therefore, a relatively high bit rate may be selected, and a spectrum efficiency loss caused by unpredictable interference from a channel or a neighboring cell may be converted to a fluctuation of a quantity of times that a same code block is transmitted, to avoid the spectrum efficiency loss.

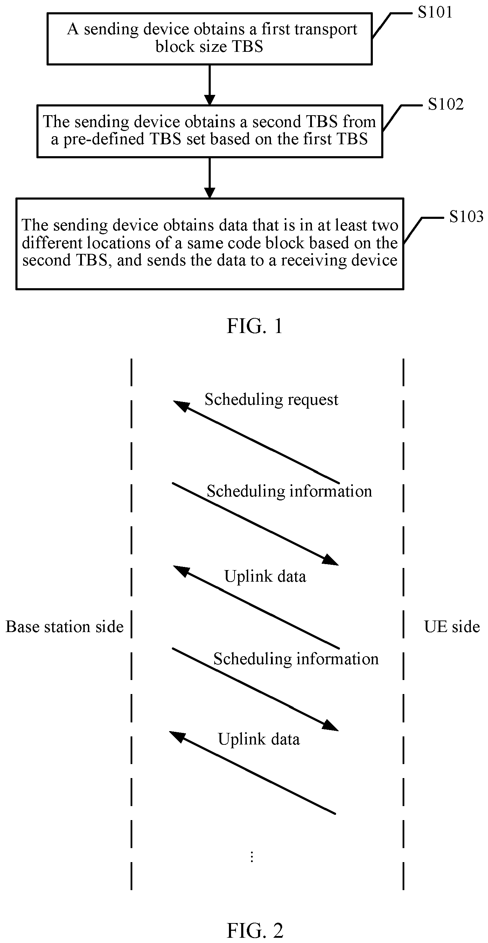

With reference to FIG. 1 to FIG. 16, the following specifically describes a data transmission method and an apparatus that are provided in the embodiments of the present invention.

Referring to FIG. 1, FIG. 1 is a schematic flowchart of a data transmission method according to an embodiment of the present invention. The method provided in this embodiment of the present invention includes the following steps.

S101. A sending device obtains a first transport block size TBS.

In some feasible implementations, a bit rate corresponding to the first transport block size (Transport Block Size, TBS) is greater than or equal to 1. The sending device may be a base station or UE.

In specific implementation, an LTE system includes a PUSCH that carries uplink data and a PDSCH that carries downlink data, and LTE data transmission includes transmission of the downlink data carried by the PDSCH and transmission of the uplink data carried by the PUSCH. When data transmission is transmission of the downlink data carried by the PDSCH, a base station is a sending device in data transmission, and UE is a receiving device of data transmission. When data transmission is transmission of the uplink data carried by the PUSCH, UE is a sending device in data transmission, and a base station is a receiving device of data transmission.

In some feasible implementations, when the sending device is a base station, and the receiving device is UE, the base station may calculate the first TBS based on a pre-defined data transmission bit rate and a quantity of to-be-scheduled resource blocks (Resource Block, RB) when obtaining the first TBS. The pre-defined data transmission bit rate is a bit rate greater than or equal to 1. To be specific, the base station may predefine a bit rate greater than or equal to 1, and then calculate, based on the pre-defined bit rate and the quantity of to-be-scheduled RBs, a TBS that makes a data transmission bit rate to be the pre-defined bit rate. In specific implementation, a bit rate is a percentage of a quantity of bits of useful information that needs to be transmitted to a quantity of bits of data that can be transmitted by using an air interface. The quantity of bits of the useful information that needs to be transmitted depends on the TBS, and the quantity of bits of the data that can be transmitted by using an air interface depends on the quantity ofRBs. Therefore, the TBS can be determined by using the pre-defined bit rate and the quantity of RBs.

In some feasible implementations, when the sending device is a base station, and the receiving device is UE, the base station may further increase the data transmission bit rate determined based on a modulation and coding scheme (Modulation and Coding Scheme, MCS) for data transmission and the quantity of to-be-scheduled RBs, and increase a bit rate less than 1 to a bit rate greater than or equal to 1. In specific implementation, the base station may select a data transmission TBS based on an MCS index and the quantity of to-be-scheduled RBs. Each data transmission TBS is corresponding to a bit rate. When a quantity of bits that can be transmitted by using an air interface does not change, if the TBS increases, the bit rate corresponding to the TBS also increases correspondingly. Therefore, selecting a data transmission TBS by the base station is equivalent to selecting a data transmission bit rate.

In specific implementation, selection of an MCS is restricted in LTE data transmission by controlling an initial block error rate (Initial Block Error Rate, IBLER). In specific implementation, the base station may select an MCS based on a signal to interference plus noise ratio (Signal to Interference plus Noise Ratio, SINR) or a channel quality indicator (Channel Quality Indicator, CQI), and adjust the selected MCS based on a target value of the IBLER. The target value of the IBLER may be set to 10%. If the current IBLER of data transmission is greater than the target value, the base station may decrease the MCS selected based on the SINR or the CQI, to increase a probability of a correct data transmission; and may further decrease the value of the IBLER so that the value is close to the target value. If the current IBLER of data transmission is less than the target value, the base station may increase the MCS selected based on the SINR or the CQI, to increase a probability of an incorrect transmission; and may further increase the value of the IBLER so that the value is close to the target value. The base station increases the selected MCS to increase a probability of an incorrect transmission and to increase the value of the IBLER. Although the probability of an incorrect transmission increases, the transmission bit rate also increases, thereby ensuring system spectrum efficiency. After determining the MCS, the base station may select a data transmission TBS based on the MCS and the quantity of to-be-scheduled RBs.

In specific implementation, in LTE, a value range of the MCS index may be obtained after quantization and coding are performed for MCSs. A PDSCH is used as an example, and the value range of the MCS index is 0 to 28 in an initial transmission. The base station may determine, based on a selected MCS, an MCS index corresponding to the MCS, and search a pre-defined TBS lookup table based on a quantity of to-be-scheduled RBs, to obtain a target TBS corresponding to the MCS index and the quantity of RBs. The pre-defined TBS lookup table includes Table 1 and Table 2. Table 1 is a table (referring to table 7.1.7.1-1 in 3GPP TS36.213 v12.2.0 (2014-06)) of modulation and a TBS index for a PDSCH, and Table 2 is a partial data table of a transport block size table (referring to table 7.1.7.2.1-1 in 3GPP TS36.213 v12.2.0 (2014-06)). Specifically, the base station may search table 1 based on the MCS index, to obtain a TBS index.

**Table 1**

| **MCS index** | **Modulation order** | **TBS index** |
|---|---|---|
| 0 | 2 | 0 |
| 1 | 2 | 1 |
| 2 | 2 | 2 |
| 3 | 2 | 3 |
| 4 | 2 | 4 |
| 5 | 2 | 5 |
| 6 | 2 | 6 |
| 7 | 2 | 7 |
| 8 | 2 | 8 |
| 9 | 2 | 9 |
| 10 | 4 | 9 |
| 11 | 4 | 10 |
| 12 | 4 | 11 |
| 13 | 4 | 12 |
| 14 | 4 | 13 |
| 15 | 4 | 14 |
| 16 | 4 | 15 |
| 17 | 6 | 15 |
| 18 | 6 | 16 |
| 19 | 6 | 17 |
| 20 | 6 | 18 |
| 21 | 6 | 19 |
| 22 | 6 | 20 |
| 23 | 6 | 21 |
| 24 | 6 | 22 |
| 25 | 6 | 23 |
| 26 | 6 | 24 |
| 27 | 6 | 25 |
| 28 | 6 | 26 |
| 29 | 2 | Reserved |
| 30 | 4 | |
| 31 | 6 | |

After finding the TBS index based on Table 1, the base station may search table 2 based on the found TBS index and the quantity of RBs, to obtain the target TBS that is corresponding to the TBS index and the quantity of RBs.

**Table 2**

| **TBS index** | **Quantity of RBs** | | | | | | | | | |
|---|---|---|---|---|---|---|---|---|---|---|
| | 1 | 2 | 3 | 4 | 5 | 6 | 7 | 8 | 9 | 10 |
| 0 | 16 | 32 | 56 | 88 | 120 | 152 | 176 | 208 | 224 | 256 |
| 1 | 24 | 56 | 88 | 144 | 176 | 208 | 224 | 256 | 328 | 344 |
| 2 | 32 | 72 | 144 | 176 | 208 | 256 | 296 | 328 | 376 | 424 |
| 3 | 40 | 104 | 176 | 208 | 256 | 328 | 392 | 440 | 504 | 568 |
| 4 | 56 | 120 | 208 | 256 | 328 | 408 | 488 | 552 | 632 | 696 |
| 5 | 72 | 144 | 224 | 328 | 424 | 504 | 600 | 680 | 776 | 872 |
| 6 | 328 | 176 | 256 | 392 | 504 | 600 | 712 | 808 | 936 | 1032 |
| 7 | 104 | 224 | 328 | 472 | 584 | 712 | 840 | 968 | 1096 | 1224 |
| 8 | 120 | 256 | 392 | 536 | 680 | 808 | 968 | 1096 | 1256 | 1384 |
| 9 | 136 | 296 | 456 | 616 | 776 | 936 | 1096 | 1256 | 1416 | 1544 |
| 10 | 144 | 328 | 504 | 680 | 872 | 1032 | 1224 | 1384 | 1544 | 1736 |
| 11 | 176 | 376 | 584 | 776 | 1000 | 1192 | 1384 | 1608 | 1800 | 2024 |
| 12 | 208 | 440 | 680 | 904 | 1128 | 1352 | 1608 | 1800 | 2024 | 2280 |
| 13 | 224 | 488 | 744 | 1000 | 1256 | 1544 | 1800 | 2024 | 2280 | 2536 |
| 14 | 256 | 552 | 840 | 1128 | 1416 | 1736 | 1992 | 2280 | 2600 | 2856 |
| 15 | 280 | 600 | 904 | 1224 | 1544 | 1800 | 2152 | 2472 | 2728 | 3112 |
| 16 | 328 | 632 | 968 | 1288 | 1608 | 1928 | 2280 | 2600 | 2984 | 3240 |
| 17 | 336 | 696 | 1064 | 1416 | 1800 | 2152 | 2536 | 2856 | 3240 | 3624 |
| 18 | 376 | 776 | 1160 | 1544 | 1992 | 2344 | 2792 | 3112 | 3624 | 4008 |
| 19 | 408 | 840 | 1288 | 1736 | 2152 | 2600 | 2984 | 3496 | 3880 | 4264 |
| 20 | 440 | 904 | 1384 | 1864 | 2344 | 2792 | 3240 | 3752 | 4136 | 4584 |
| 21 | 488 | 1000 | 1480 | 1992 | 2472 | 2984 | 3496 | 4008 | 4584 | 4968 |
| 22 | 520 | 1064 | 1608 | 2152 | 2664 | 3240 | 3752 | 4264 | 4776 | 5352 |
| 23 | 552 | 1128 | 1736 | 2280 | 2856 | 3496 | 4008 | 4584 | 5160 | 5736 |
| 24 | 584 | 1192 | 1800 | 2408 | 2984 | 3624 | 4264 | 4968 | 5544 | 5992 |
| 25 | 616 | 1256 | 1864 | 2536 | 3112 | 3752 | 4392 | 5160 | 5736 | 6200 |
| 26 | 712 | 1480 | 2216 | 2984 | 3752 | 4392 | 5160 | 5992 | 6712 | 7480 |

For example, if the MCS index selected by the base station is 16, and the quantity of to-be-scheduled RBs of the base station is 8, it can be found from Table 1 that a TBS index corresponding to the MCS index is 15, and it can be further found from Table 2 based on the TBS index and the quantity of RBs that the target TBS is 2472.

In some feasible implementations, when data transmission is transmission of downlink data carried by a PDSCH, after searching Table 2 to find the target TBS, the base station may increase the target TBS to N times the size of the target TBS to obtain the first TBS. Specifically, the base station may multiply the target TBS by an increase factor N to obtain an N-fold value of the target TBS, and round the obtained N-fold value of the target TBS to obtain the first TBS. The target TBS is corresponding to a first bit rate, the first TBS is corresponding to a second bit rate, and the second bit rate is N times of the first bit rate, and N is a positive real number that makes a bit rate corresponding to the second TBS greater than or equal to 1. To be specific, the base station may determine, based on the bit rate corresponding to the target TBS, an increase factor required to increase the bit rate corresponding to the target TBS to a bit rate greater than or equal to 1, where the increase factor is set to N, increase the target TBS based on the increase factor N, and round an increased TBS to obtain the first TBS, so that the second bit rate corresponding to the first TBS is not less than 1. In this embodiment of the present invention, increase factors used to increase target TBSs found for MCS orders may be the same or different, and may be specifically determined depending on an application requirement. This is not limited herein.

For example, the base station finds that the target TBS is 2472 based on the foregoing implementation. In this case, the target TBS of 2472 is corresponding to the first bit rate. The first bit rate may be specifically obtained through calculation based on the target TBS and the quantity of RBs. Herein, the first bit rate of 0.5 is used as an example for description. If the first bit rate is increased to twice the size of the first bit rate, the increased bit rate may be greater than or equal to 1 (for example, 0.5*2 = 1), and the target TBS may be increased to twice the size of the target TBS to obtain a two-fold value of the target TBS, namely, 4944. In this case, the first TBS is 4944. If data obtained after the increase is not an integer, the data may be rounded to obtain an integer, and the rounded data is set to the first TBS.

Further, in some feasible implementations, when data transmission is transmission of uplink data carried by a PUSCH, a base station is used as the receiving device, and UE is used as the sending device. The base station and the UE search for a data transmission TBS by using an agreed search rule, and specifically may agree on a same search rule. The receiving device and the sending device find a data transmission TBS by using a same search rule. This can ensure smooth data sending and receiving and correct data decoding. Data transmission between the base station and the UE may be controlled by the base station. To be specific, the base station may select an MCS or predefine a data transmission bit rate, the base station determines information such as a quantity of to-be-scheduled RBs, and the base station may deliver scheduling information to the UE to trigger the UE to transmit data. The base station may further send the pre-defined data transmission bit rate and the quantity of to-be-scheduled RBs to the UE by using the scheduling information, so that the UE obtains the first TBS.

In some feasible implementations, when data transmission is transmission of uplink data carried by a PUSCH, the base station may send TBS search information such as the pre-defined bit rate or the selected MCS index, and the quantity of to-be-scheduled RBs to the UE by using the scheduling information, so that the UE finds a corresponding TBS based on the TBS search information.

In some feasible implementations, when the scheduling information carries the pre-defined data transmission bit rate and the quantity of to-be-scheduled RBs of the base station, after receiving the scheduling information, the UE may calculate the first TBS based on the pre-defined bit rate and the quantity of RBs. An implementation in which the UE calculates the first TBS based on the bit rate and the RBs is the same as that in which the base station calculates the first TBS. For specifics, refer to the implementation in which the base station calculates the first TBS based on the pre-defined bit rate. Details are not described herein again.

In some feasible implementations, when the scheduling information carries the MCS index for data transmission and the quantity of to-be-scheduled RBs, after receiving the scheduling information sent by the base station, the UE may search the pre-defined TBS lookup table for the target TBS based on the MCS index and the quantity of RBs. The TBS lookup table includes Table 2 and Table 3. Table 3 is a table of modulation, a TBS index, and a redundancy version for a PUSCH (referring to table 8.6. 1-1 in 3GPP TS36.213 v12.2.0 (2014-06)). Specifically, the UE may search table 3 based on the MCS index, to obtain a TBS index; and search table 2 based on the found TBS index and the quantity of to-be-scheduled RBs, to obtain a target TBS. A bit rate corresponding to the target TBS is less than 1. After finding the target TBS, the UE may further increase the target TBS to N times the size of the target TBS to obtain the first TBS. N is a positive real number that makes the bit rate corresponding to the first TBS greater than or equal to 1. For a specific implementation process in which the UE finds the target TBS based on the MCS index and the quantity of RBs, and increases the target TBS to obtain the first TBS, refer to the implementation performed by the base station. Details are not described herein again.

**Table 3**

| **MCS index** | **Modulation order** | **TBS index** | **Redundancy version** |
|---|---|---|---|
| 0 | 2 | 0 | 0 |
| 1 | 2 | 1 | 0 |
| 2 | 2 | 2 | 0 |
| 3 | 2 | 3 | 0 |
| 4 | 2 | 4 | 0 |
| 5 | 2 | 5 | 0 |
| 6 | 2 | 6 | 0 |
| 7 | 2 | 7 | 0 |
| 8 | 2 | 8 | 0 |
| 9 | 2 | 9 | 0 |
| 10 | 2 | 10 | 0 |
| 11 | 4 | 10 | 0 |
| 12 | 4 | 11 | 0 |
| 13 | 4 | 12 | 0 |
| 14 | 4 | 13 | 0 |
| 15 | 4 | 14 | 0 |
| 16 | 4 | 15 | 0 |
| 17 | 4 | 16 | 0 |
| 18 | 4 | 17 | 0 |
| 19 | 4 | 18 | 0 |
| 20 | 4 | 19 | 0 |
| 21 | 6 | 19 | 0 |
| 22 | 6 | 20 | 0 |
| 23 | 6 | 21 | 0 |
| 24 | 6 | 22 | 0 |
| 25 | 6 | 23 | 0 |
| 26 | 6 | 24 | 0 |
| 27 | 6 | 25 | 0 |
| 28 | 6 | 26 | 0 |
| 29 | reserved | 1 | - |
| 30 | | 2 | - |
| 31 | | 3 | - |

For example, if the MCS index selected by the base station is 16, and the quantity of to-be-scheduled RBs of the base station is 8, the base station may send the MCE index and the quantity of RBs to the UE by using the scheduling information. After determining the MCS index and the quantity of RBs based on the scheduling information, the UE may search table 3 to find that the TBS index corresponding to the MCS index is 15, and search table 2 to find that the target TBS is 2472 based on the TBS index and the quantity of RBs. After finding that the target TBS is 2472, the UE may also increase the target TBS based on the foregoing implementation, to determine that the first TBS is 4944. For specifics, refer to the implementation performed by the base station. Details are not described herein again.

It should be noted that in this embodiment of the present invention, in an implementation process in which the base station or the UE increases the target TBS and rounds an increased target TBS to obtain the first TBS, the first bit rate corresponding to the target TBS may alternatively be increased to obtain a bit rate that is M1 times the size of the first bit rate, where the bit rate that is M1 times the size of the first bit rate may alternatively be less than 1 or infinitely close to 1. This is not limited herein. M1 is a positive real number less than N. When the target TBS is increased to obtain a TBS that is M1 times the size of the target TBS, although a bit rate corresponding to the TBS that is M1 times the size of the target TBS is less than 1, and data may be transmitted in a single transmission and decoding manner, the bit rate is still M1 times the size of the first bit rate corresponding to the target TBS. In this case, the bit rate is increased, and spectrum efficiency of a transmission link is improved accordingly. When the bit rate corresponding to the increased TBS is less than 1, data may still be transmitted between the sending device and the receiving device in an existing operation manner. In other words, the receiving device can correctly decode data initially transmitted by the sending device. Details are not described herein again.

In some feasible implementations, because each bit rate for a single transmission corresponding to a target TBS that is found by the sending device (the base station in downlink data transmission or the UE in uplink data transmission) based on the MCS index and the quantity of RBs is less than 1.0, if the sending device sends data directly based on the target TBS, higher spectrum efficiency of a transmission link cannot be obtained. If interference from a channel or a neighboring cell has an unpredictable fluctuation, a bit rate is further reduced to ensure a probability of a correct initial data transmission. This further reduces spectrum efficiency of the transmission link. To ensure spectrum efficiency of the transmission link, the found target TBS may be increased to obtain a larger TBS, and data may be transmitted based on the increased TBS. This increases a data transmission bit rate, and ensures spectrum efficiency of the transmission link.

S102. The sending device obtains a second TBS from a pre-defined TBS set based on the first TBS.

In specific implementation, an absolute value of a difference between the second TBS and the first TBS is the smallest in the pre-defined TBS set, or the second TBS is greater than or equal to the first TBS and a difference between the second TBS and the first TBS is the smallest in the pre-defined TBS set, or the second TBS is less than or equal to the first TBS and a difference between the second TBS and the first TBS is the smallest in the pre-defined TBS set.

In some feasible implementations, after obtaining the first TBS, the sending device may obtain the second TBS from the pre-defined TBS set based on the first TBS. The pre-defined TBS set is a set including TBSs listed in Table 2. If data transmission is downlink data transmission, after the base station performs processing to obtain the first TBS, Table 2 may be searched for a TBS (4968 listed in Table 2) closest to the first TBS (namely, 4944), the found TBS is set to the second TBS, and data may be transmitted based on the second TBS. The TBS closest to the first TBS may include at least one of the following cases: An absolute value of a difference between the TBS closest to the first TBS and the first TBS is the smallest in the pre-defined TBS set, or the TBS closest to the first TBS is greater than or equal to the first TBS and a difference between the TBS closest to the first TBS and the first TBS is the smallest in the pre-defined TBS set, or the TBS closest to the first TBS is less than or equal to the first TBS and a difference between the TBS closest to the first TBS and the first TBS is the smallest in the pre-defined TBS set, or the like. This may be specifically determined depending on an actual application and is not limited herein. It should be noted that numbers of the first TBS and the second TBS (namely, first and second) are only for better differentiation and description, and are not used to limit specific content thereof. The first TBS and the second TBS are respectively TBS values related to different operation processes in which the base station searches for a TBS.

If data transmission is uplink data transmission, the UE may similarly find the second TBS based on the foregoing implementation. Details are not described herein again.

S103. The sending device obtains data in at least two different locations in a same code block based on the second TBS, and sends the data to a receiving device.

In some feasible implementations, when a bit rate corresponding to the second TBS is greater than 1, if data transmission is downlink data transmission, it indicates that a data size that can be transmitted by the base station in a single transmission by using an air interface is less than a quantity of bits of useful information that needs to be transmitted. Data transmitted in a single transmission does not include redundant data, and the receiving device (namely, the UE) cannot correctly perform decoding based on the data transmitted in the single transmission, and the base station needs to transmit the data of the same code block for a plurality of times. The UE may perform HARQ combining and decoding on the received data that is transmitted by the base station for a plurality of times. An equivalent bit rate is less than 1.0 when different encoded bits are combined. A lower equivalent bit rate indicates that more redundant information is included, and vice versa. Therefore, an error can be corrected to obtain the data of the code block that is sent by the base station. If data transmission is uplink data transmission, it indicates that a data size that can be transmitted by the UE in a single transmission by using an air interface is less than a quantity of bits of useful information that needs to be transmitted. Data transmitted in a single transmission does not include redundant data, and the receiving device (namely, the base station) cannot correctly perform decoding based on the data transmitted in the single transmission, and the UE needs to transmit the data of the same code block for a plurality of times. The base station may perform HARQ combining and decoding on the received data that is transmitted by the UE for a plurality of times. An equivalent bit rate is less than 1.0 when different encoded bits are combined. A lower equivalent bit rate indicates that more redundant information is included, and vice versa. Therefore, an error can be corrected to obtain the data of the code block that is sent by the UE.

In some feasible implementations, when data transmission is downlink data transmission, the base station may determine, based on the second TBS and a size of scheduled data of a data block, a quantity of transmission times that is required to transmit the code block to the UE based on the second TBS, and transmit a different encoded bit of the code block each time. The different encoded bit of the code block that is transmitted each time may be transmitted by using a different redundancy version, and the different redundancy version may carry data of the different encoded bit. The base station may determine a redundancy version based on the size of the data of the code block and the determined quantity of transmission times, where the quantity of transmission times is greater than 1. The base station determines a redundancy version used in each transmission, and determines, based on the redundancy version used in each transmission, a location that is of the data to be transmitted each time and that is in the code block. After determining the location that is of data to be transmitted by using each redundancy version and that is in the code block, the base station may obtain, based on the location that is of the data to be transmitted by using each redundancy version and that is in the code block, the data to be transmitted each time, and send, to the UE based on a sequence of redundancy versions, the obtained data to be transmitted each time. After receiving data corresponding to the plurality of redundancy versions that is sent by the base station, the UE may perform HARQ combining and decoding on the data corresponding to the plurality of redundancy versions. An equivalent bit rate is less than 1.0 when different encoded bits are combined. A lower equivalent bit rate indicates that more redundant information is included, and vice versa. Therefore, an error can be corrected to obtain the data of the code block.

In some feasible implementations, if data transmission is uplink data transmission, the base station may determine, based on the second TBS and the size of the scheduled data of the code block, a quantity M of scheduling times that is required to schedule the data of the code block based on the second TBS. Because the UE also transmits data based on the second TBS when the base station schedules the data of the code block, where the bit rate corresponding to the second TBS is greater than 1, the base station cannot correctly perform decoding on data transmitted by the UE in a single transmission. In this case, the base station needs to perform scheduling for a plurality of times to trigger the UE to transmit data for a plurality of times, and Therefore the quantity M of scheduling times is greater than 1.

In some feasible implementations, after determining the quantity M of scheduling times that is required to schedule the data of the code block, the base station may continually send M pieces of scheduling information to the UE within a preset time interval. The scheduling information sent each time carries the TBS search information. To be specific, the scheduling information carries the quantity of to-be-scheduled RBs and the pre-defined data transmission bit rate, or the scheduling information carries the quantity of to-be-scheduled RBs and the MCS index for data transmission, or the like. The preset time interval may be a plurality of short transmission time intervals (Transmission Time Interval, TTI), that is, short TTIs between sending a first piece of scheduling information by the base station and receiving, by the base station, data that is uploaded by the UE and that is corresponding to the scheduling information. As shown in FIG. 2, FIG. 2 is a schematic diagram of data exchange between a receiving device and a sending device in uplink data transmission in the prior art. In an existing implementation of uplink data transmission, each time the base station sends scheduling information to the UE, the UE feeds back uplink data to the base station. After receiving the uplink data sent by the UE, the base station delivers a next piece of scheduling information, and the UE feeds back uplink data to the base station again, and so on, until transmission of all data is completed. Because there is a specific transmission time interval between sending the scheduling information to the UE by the base station and feeding back, by the UE, the uplink data corresponding to the scheduling information to the base station, the base station needs to wait for several transmission time intervals before sending a next piece of scheduling information. A larger quantity of scheduling times indicates a longer waiting time of the base station, resulting in a longer data transmission time and low transmission efficiency.

It should be noted that quantities of RBs carried in the M pieces of scheduling information that is sent by the base station to the UE may be the same or different. This may be specifically determined depending on an actual application requirement, and is not limited herein. A data size sent by using each redundancy version depends on a quantity of RBs carried in each piece of scheduling information sent by the base station to the UE, and the quantity of RBs may be selected so that data sent by using each redundancy version is close, as much as possible, to all useful data in a location that is corresponding to the redundancy version and that is in the code block.

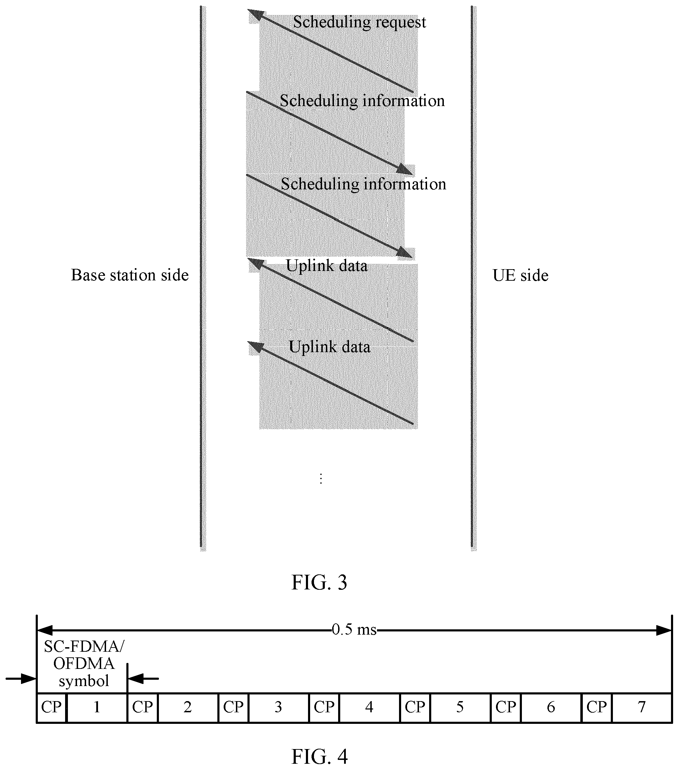

An implementation described in this embodiment of the present invention is shown in FIG. 3. FIG. 3 is a schematic flowchart of uplink data transmission according to an embodiment of the present invention. The base station may determine, in advance, the quantity of scheduling times that is required to transmit the data of the code block. Assuming that the quantity M of scheduling times is 2, the base station may send M-1 pieces of (as shown in FIG. 3, M-1 is remaining one of two pieces) scheduling information in continuous short TTIs after sending a first piece of scheduling information. The base station delivers the remaining M-1 pieces of scheduling information by fully utilizing a time interval between delivering of the first piece of scheduling information and receiving of uplink data corresponding to the first piece of scheduling information. When the base station is used as the receiving device, and the UE is used as the sending device, the base station may determine, based on the implementation in which the base station is used as the sending device, the second TBS that is used when the UE is used as the sending device to transmit data, determine the quantity of scheduling times based on the size of the scheduled data of the code block, and send a plurality of pieces of scheduling information to the UE within a preset time. For a specific implementation in which the base station, as the receiving device, determines the second TBS that is used when the UE transmits data, refer to the implementation in which the base station is used as the sending device. Details are not described herein again. The UE may continually receive the M pieces of scheduling information of the base station within the preset time interval, and determine, based on the M pieces of scheduling information, data correspondingly scheduled by each piece of scheduling information. After receiving the first piece of scheduling information, the UE may upload data to the base station based on an uplink data feedback time, and may sequentially upload, in continuous time intervals after data is uploaded for the first time, uplink data corresponding to each of the M-1 pieces of scheduling information. This reduces a data uploading interval, and improves data transmission efficiency.

It should be noted that in the implementation described in this embodiment of the present invention, regardless of uplink data transmission or downlink data transmission, the frame structure used for data transmission between the base station and the UE is a frame structure having the short TTI. As shown in FIG. 4, FIG. 4 is a schematic structural diagram of an LTE timeslot. In a non-short TTI in LTE, duration of a subframe is one millisecond (ms), each subframe is divided into two timeslots (slot) each with duration of 0.5 ms, and each timeslot includes seven symbols (a symbol corresponding to uplink data transmission is a single-carrier frequency-division multiple access (Single-carrier Frequency-Division Multiple Access, SC-FDMA) symbol, and a symbol corresponding to downlink data transmission is an orthogonal frequency division multiple access (Orthogonal Frequency Division Multiple Access, OFDMA) symbol). Based on LTE, in this embodiment of the present invention, data may be transmitted by using the frame structure having the short TTI. To be specific, one TTI may include only 1, 2, 3, 4, or 7 SC-FDMA or OFDMA symbols (in a non-short TTI, each TTI includes 14 SC-FDMA or OFDMA symbols). In this embodiment of the present invention, an increase of a TBS is equivalent to an increase of a bit rate. The data of the code block needs to be transmitted for a plurality of times after the bit rate is increased. Therefore, a transmission delay of a code block is increased. In data transmission performed by using the frame structure having the short TTI, a characteristic of a short TTI interval of the short TTI may be used, to resolve the problem of an increase of a transmission delay caused by the increase of a bit rate, ensure that a transmission delay caused by the increase of the bit rate is close to a transmission delay that exists before the increase of the bit rate, and improve data transmission efficiency.

It should be noted that in the implementation described in this embodiment of the present invention, the base station may alternatively send M pieces of scheduling information in the data transmission manner shown in FIG. 2 by using the frame structure having the short TTI. This is not limited herein. In data transmission performed by using the frame structure having the short TTI, although the data transmission manner shown in FIG. 2 is used, the base station may also reduce a data transmission increment while increasing a bit rate, and ensure that a transmission delay of data transmission is close to a transmission delay that exists before the increase of the bit rate.

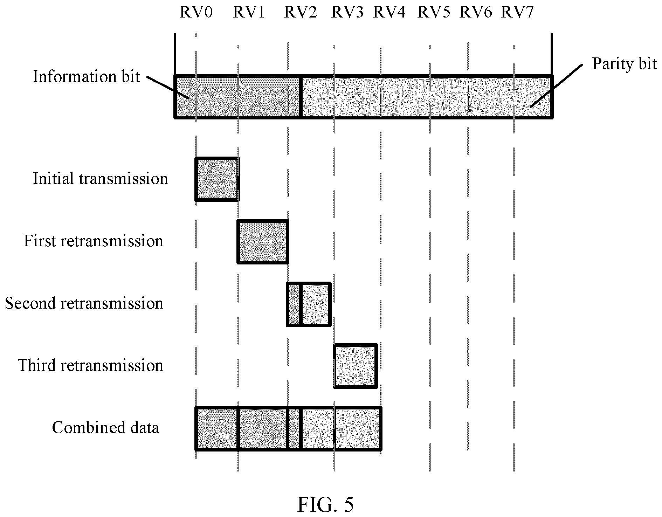

In some feasible implementations, if data transmission is uplink data transmission, after the base station sends the scheduling information to the UE, the UE may send data to the base station. After receiving the data uploaded by the UE, the base station may perform HARQ combining and decoding on the data of the same code block that is uploaded by the UE for a plurality of times. As shown in FIG. 5, FIG. 5 is a schematic diagram in which a receiving device performs combining and decoding on data sent by a sending device. Assuming that the base station determines, based on the size of the data of the code block and the second TBS, that the quantity of scheduling times that is required to schedule the data of the code block based on the second TBS is four, the base station may send four pieces of scheduling information to the UE. After receiving the scheduling information sent by the base station, the UE may upload data to the base station by using eight redundancy versions (including RVO to RV7), and may specifically upload data corresponding to four redundancy versions to the base station by using an initial transmission, a first retransmission, a second retransmission, and a third retransmission. After receiving the data corresponding to the four redundancy versions, the base station may perform combining and decoding on the data of the code block, to obtain the data of the code block. The data of the code block may be specifically data of an information bit shown in FIG. 5, and data of a parity bit shown in FIG. 5 is a redundant bit and may be used to correct an error in combining and decoding. Combining and decoding performed by the receiving device (a base station in uplink data transmission and UE in downlink transmission) on the data of the code block resolves the problem that demodulation and decoding cannot be correctly performed in a single transmission when the sending device (UE in uplink data transmission and a base station in downlink data transmission) transmits data by using a high bit rate. Combining and decoding performed by the receiving device ensures that data demodulation and decoding can also be correctly performed when the sending device transmits data by using a high bit rate, thereby increasing a bit rate while ensuring a correct data transmission. If other conditions of data transmission do not change, an increase of a bit rate also improves spectrum efficiency of a transmission link.

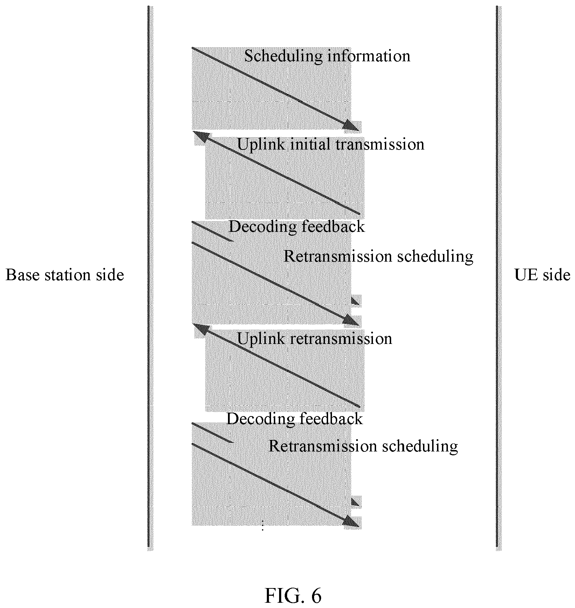

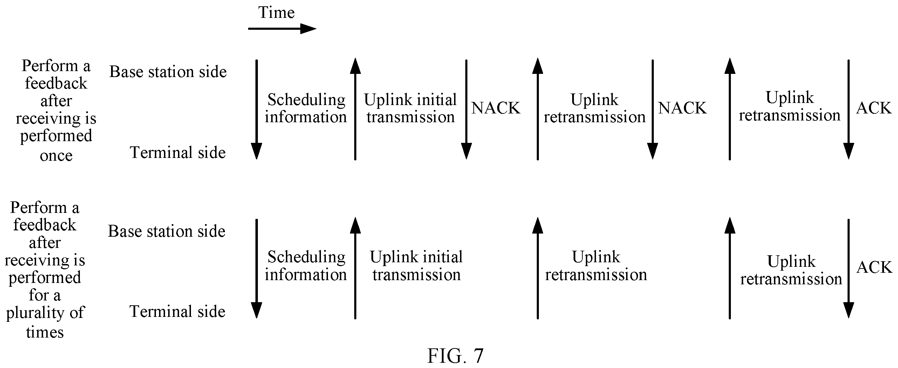

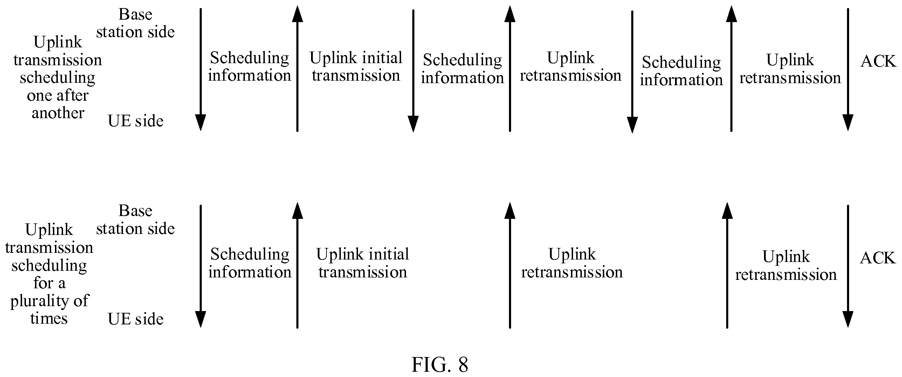

In some feasible implementations, as shown in FIG. 6, FIG. 6 is a schematic diagram of an adaptive retransmission procedure in uplink data transmission. In uplink data transmission, after receiving data uploaded by a sending device (namely, UE), a receiving device (namely, a base station) feeds back a receiving status of the data and performs retransmission scheduling. The base station sends scheduling information to the UE, and the UE uploads uplink data to the base station after receiving the scheduling information. After receiving the data, the base station feeds back a demodulation and decoding status of the uplink data to the UE, and sends retransmission scheduling information to the UE based on the demodulation and decoding status. After receiving the retransmission scheduling information, the UE retransmits the uplink data, and so on, until the uplink data is successfully demodulated and decoded. Specifically, after receiving data uploaded by the UE, the base station may feed back a receiving status of the data of a code block to the UE in a preset feedback manner. The receiving status may include an ACK or a NACK, respectively indicating correct data demodulation and decoding, incorrect demodulation and decoding, and the like. The preset feedback manner may include: performing feedback once after data is received each time, or performing feedback once after data is received for K times. K is a natural number greater than 1 and not greater than M. To be specific, the base station may feed back a receiving status of data after the data fed back by the UE is received each time, or may feed back a receiving status of data after the data fed back by the UE is received for a plurality of times, or may feed back a receiving status of data after receiving of the data fed back by the UE for all times is completed. This is not limited herein. A specific implementation in which the base station feeds back the receiving status of data after the data fed back by the UE is received each time may be an implementation described in the 3GPP standard protocol. Details are not described herein again. Referring to FIG. 7, FIG. 7 is a schematic diagram of comparison between retransmission feedback time sequences. In an embodiment of the present invention, it is assumed that a feedback manner agreed on by a base station and UE is performing feedback once after data is received for three times. In other words, a quantity of times that feedback is not performed is two. The base station may feed back a receiving status of data after receiving the data that is uploaded by the UE for three times. Referring to FIG. 8, FIG. 8 is another schematic diagram of comparison between retransmission feedback time sequences. When a scheduling resource does not change, if a feedback manner agreed on by a base station and UE is performing feedback once after data is received for three times, after sending, for the first time, scheduling information of data initially transmitted by the UE, the base station may alternatively no longer send scheduling information of data that is uploaded twice after the UE initially transmits the data, thereby reducing control signaling overheads.

It should be noted that in transmission of data of a same code block, when a receiving device (namely, a base station in uplink data transmission or UE in downlink data transmission) receives data sent by a sending device (namely, UE in uplink data transmission and a base station in downlink data transmission), a plurality of feedback manners may be included in a plurality of data receiving processes. To be specific, when receiving data of a same code block, the receiving device may use both manners of performing feedback once after data is received each time and feeding back data after data is received for a plurality of times. Different feedback manners may be used in a process in which the data of the same code block is received for a plurality of times. For example, when receiving data of a same code block that is sent by the UE for a plurality of times, the base station may use, when receiving data for the first time and the second time, the feedback manner of feeding back a receiving status of data after the data is received each time, or may use, when receiving data for the third time and the fourth time, a feedback manner of feeding back a receiving status of data after the data is received twice, or the like, to perform a data receiving feedback. Correspondingly, the base station may send scheduling information of data of a code block in a feedback manner agreed on by the base station and the UE, and may use both manners of delivering scheduling information one after another and continuously delivering a plurality of pieces of scheduling information at a time. Different manners of delivering scheduling information may be used in a process of scheduling data of a same code block. This is not limited herein. For example, the base station may deliver, each time after data sent by the UE is received, scheduling information for next scheduling, or continuously deliver, before receiving data sent by the UE, scheduling information used for a plurality of scheduling times.

In some feasible implementations, if data transmission is downlink data transmission, the UE may similarly feed back a receiving status of data in the foregoing manner after receiving the data of a code block that is sent by the base station. For specifics, refer to the foregoing embodiment. Details are not described herein again.

It should be noted that in this embodiment of the present invention, when the sending device (UE in uplink data transmission or a base station in downlink data transmission) sends data of a same code block for a plurality of times by using a plurality of redundancy versions, a TTI used to send the data of the same code block by using different redundancy versions may be determined depending on an actual application, and may be a plurality of continuous TTIs or may be a plurality of discontinuous TTIs. Therefore, an operation is flexible and adaptability is high.

In this embodiment of the present invention, the sending device may obtain the TBS whose bit rate is greater than or equal to 1 in a data transmission process, and transmit the data in the different locations in the same code block to the receiving device for a plurality of times by using the obtained TBS whose bit rate is greater than or equal to 1, so that the receiving device may perform HARQ combining and decoding on the data of the same code block that is transmitted by the sending device for a plurality of times, to ensure correct data demodulation and decoding when data is transmitted by using a high bit rate. The sending device transmits data by using the TBS corresponding to a high bit rate; and the receiving device performs HARQ combining and decoding on the data, to ensure correct receiving and decoding of the data that is transmitted by using the high bit rate. In this way, a time diversity gain and an encoding gain are obtained, transmission quality of data of the code block is ensured, and spectrum efficiency of a data system is improved.

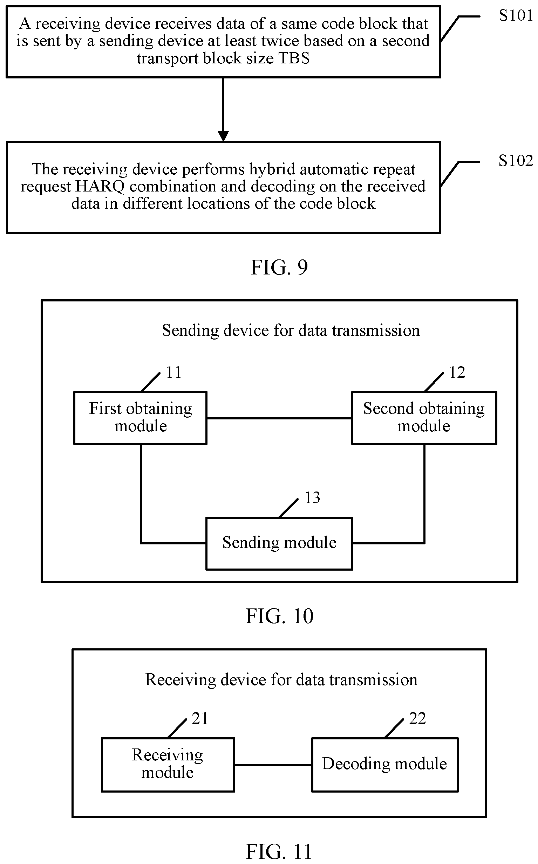

Referring to FIG. 9, FIG. 9 is another schematic flowchart of a data transmission method according to an embodiment of the present invention. The method described in this embodiment of the present invention includes the following steps.

S201. A receiving device receives data of a same code block that is sent by a sending device at least twice based on a second transport block size TBS.

The data of the same code block that is sent at least twice is data in different locations in the code block, and the second TBS is obtained from a pre-defined TBS set based on a first TBS corresponding to a bit rate greater than or equal to 1.

S202. The receiving device performs hybrid automatic repeat request HARQ combining and decoding on the received data in different locations in the code block.

In some feasible implementations, after the receiving, by a receiving device, data of a same code block that is sent by a sending device at least twice based on a second TBS, the method further includes:
feeding back, by the receiving device, a receiving status of the data of the code block to the sending device in a preset feedback manner, where
the feedback manner includes at least one of the following: performing feedback once after data is received each time, and performing feedback once after data is received for K times; and
K is a natural number greater than 1 and not greater than M.

In some feasible implementations, the receiving device is a base station, and the sending device is UE; and
before the receiving, by a receiving device, data of a same code block that is sent by a sending device at least twice based on a second TBS, the method further includes:
calculating, by the base station, the first TBS, and obtaining the second TBS from the pre-defined TBS set based on the first TBS, where an absolute value of a difference between the second TBS and the first TBS is the smallest in the pre-defined TBS set, or the second TBS is greater than the first TBS and a difference between the second TBS and the first TBS is the smallest in the pre-defined TBS set, or the second TBS is less than the first TBS and a difference between the second TBS and the first TBS is the smallest in the pre-defined TBS set; and
determining, by the base station based on the second TBS and a size of the scheduled data of the code block, a quantity M of scheduling times that is required to schedule the data of the code block based on the second TBS, and continually sending M pieces of scheduling information to the UE within a preset time interval.

In some feasible implementations, the calculating, by the base station, the first TBS includes:
calculating, by the base station, the first TBS based on a pre-defined data transmission bit rate and a quantity of to-be-scheduled resource blocks RBs, where the pre-defined data transmission bit rate is the bit rate corresponding to the first TBS; or
searching, by the base station, a pre-defined TBS lookup table for a target TBS based on a modulation and coding scheme MCS index for data transmission and a quantity of to-be-scheduled RBs, and increasing the target TBS to N times the size of the target TBS to obtain the first TBS, where a bit rate corresponding to the target TBS is less than 1, and N is a positive real number that makes the bit rate corresponding to the first TBS greater than or equal to 1.

In some feasible implementations, the scheduling information is used to trigger the UE to send the data of the code block to the base station, where
the scheduling information carries the quantity of to-be-scheduled RBs and at least one piece of the following information: the pre-defined data transmission bit rate and the MCS index for data transmission.

In some feasible implementations, a frame structure used for data transmission between the receiving device and the sending device is a frame structure having a short transmission time interval short TTI, where
in the frame structure having a short TTI, a quantity of symbols included in each TTI is any one of 1, 2, 3, 4, or 7.

In specific implementation, for implementations performed by the receiving device in uplink data transmission and downlink data transmission, refer to the implementations described in the steps in the foregoing embodiments. Details are not described herein again.

In this embodiment of the present invention, the receiving device may receive the data that is in the different locations in the same code block and that is transmitted by the sending device for a plurality of times by using a high bit rate, and may perform HARQ combining and decoding on the data of the same code block that is transmitted for a plurality of times, to ensure correct demodulation and decoding of the data when the data is transmitted by using the high bit rate. In this way, a time diversity gain and an encoding gain are obtained, transmission quality of data of the code block is ensured, and spectrum efficiency of a data system is improved.

Referring to FIG. 10, FIG. 10 is a schematic structural diagram of a sending device for data transmission according to an embodiment of the present invention. The sending device described in this embodiment of the present invention includes:
a first obtaining module 11, configured to obtain a first transport block size TBS, where a bit rate corresponding to the first TBS is greater than or equal to 1;
a second obtaining module 12, configured to obtain a second TBS from a pre-defined TBS set based on the first TBS obtained by the first obtaining module 11, where an absolute value of a difference between the second TBS and the first TBS is the smallest in the pre-defined TBS set, or the second TBS is greater than or equal to the first TBS and a difference between the second TBS and the first TBS is the smallest in the pre-defined TBS set, or the second TBS is less than or equal to the first TBS and a difference between the second TBS and the first TBS is the smallest in the pre-defined TBS set; and
a sending module 13, configured to: obtain data in at least two different locations in a same code block based on the second TBS obtained by the second obtaining module 12, and send the data to a receiving device, so that the receiving device performs hybrid automatic repeat request HARQ combining and decoding on the data in the at least two different locations.

In some feasible implementations, the sending device is a base station, and the receiving device is user equipment UE; and
the first obtaining module 11 is specifically configured to:
calculate the first TBS based on a pre-defined data transmission bit rate and a quantity of to-be-scheduled resource blocks RBs, where
the pre-defined data transmission bit rate is the bit rate corresponding to the first TBS.

In some feasible implementations, the sending device is a base station, and the receiving device is UE; and
the first obtaining module 11 is specifically configured to:
search a pre-defined TBS lookup table for a target TBS based on a modulation and coding scheme MCS index for data transmission and a quantity of to-be-scheduled RBs, where a bit rate corresponding to the target TBS is less than 1; and
increase the target TBS to N times the size of the target TBS to obtain the first TBS, where N is a positive real number that makes the bit rate corresponding to the first TBS greater than or equal to 1.

In some feasible implementations, the sending device is UE, and the receiving device is a base station; and
the first obtaining module 11 is specifically configured to:
receive scheduling information of the base station, and obtain the first TBS based on the scheduling information.

In some feasible implementations, the scheduling information carries a pre-defined data transmission bit rate and a quantity of to-be-scheduled RBs; and
the first obtaining module 11 is specifically configured to:
calculate the first TBS based on the pre-defined bit rate and the quantity of RBs.

In some feasible implementations, the scheduling information carries an MCS index for data transmission and a quantity of to-be-scheduled RBs; and
the first obtaining module 11 is specifically configured to:
search a pre-defined TBS lookup table for a target TBS based on the MCS index and the quantity of to-be-scheduled RBs, where a bit rate corresponding to the target TBS is less than 1; and
increase the target TBS to N times the size of the target TBS to obtain the first TBS, where N is a positive real number that makes the bit rate corresponding to the first TBS greater than or equal to 1.

In some feasible implementations, the sending module 13 is specifically configured to:
determine, based on the second TBS and a size of the scheduled data of the code block, a quantity of transmission times that is required to transmit the code block to the receiving device based on the second TBS, where the quantity of transmission times is greater than 1;
determine, based on the size of the data of the code block and the quantity of transmission times, a redundancy version used in each transmission;
determine, based on the redundancy version used in each transmission, a location that is of data to be transmitted each time and that is in the code block;
obtain, based on the location that is of the data to be transmitted each time and that is in the code block, the data to be transmitted each time; and
send, to the receiving device, the data to be transmitted each time.

In some feasible implementations, the sending device is UE, and the receiving device is a base station; and the first obtaining module 11 is specifically configured to:
continually receive M pieces of scheduling information of the base station within a preset time interval, where
the M pieces of scheduling information are scheduling information that is sent to the UE by the base station after the base station determines, based on the second TBS and a size of the scheduled data of the code block, a quantity M of scheduling times that is required to schedule the data of the code block based on the second TBS, and M is greater than 1.

In some feasible implementations, a frame structure used for data transmission between the sending device and the receiving device is a frame structure having a short transmission time interval short TTI, where
in the frame structure having a short TTI, a quantity of symbols included in each TTI is any one of 1, 2, 3, 4, or 7.

In specific implementation, the sending device may be specifically UE in uplink data transmission, or a base station in downlink data transmission. The sending device may perform a corresponding implementation by using the modules included in the sending device. For a specific implementation, refer to the implementations described in the steps in the foregoing embodiments. Details are not described herein again.

In this embodiment of the present invention, the sending device may obtain the TBS whose bit rate is greater than or equal to 1 in a data transmission process, and transmit the data in the different locations in the same code block to the receiving device for a plurality of times by using the obtained TBS whose bit rate is greater than or equal to 1, so that the receiving device may perform HARQ combining and decoding on the data of the same code block that is transmitted by the sending device for a plurality of times, to ensure correct data demodulation and decoding when data is transmitted by using a high bit rate. The sending device transmits data by using the TBS corresponding to a high bit rate; and the receiving device performs HARQ combining and decoding on the data, to ensure correct receiving and decoding of the data that is transmitted by using the high bit rate. In this way, a time diversity gain and an encoding gain are obtained, transmission quality of data of the code block is ensured, and spectrum efficiency of a data system is improved.

Referring to FIG. 11, FIG. 11 is a schematic structural diagram of a receiving device for data transmission according to an embodiment of the present invention. The receiving device described in this embodiment of the present invention includes:
a receiving module 21, configured to receive data of a same code block that is sent by a sending device at least twice based on a second transport block size TBS, where the data of the same code block that is sent at least twice is data in different locations in the code block, and the second TBS is obtained from a pre-defined TBS set based on a first TBS corresponding to a bit rate greater than or equal to 1; and
a decoding module 22, configured to perform hybrid automatic repeat request HARQ combining and decoding on the data that is in the different locations in the code block and that is received by the receiving module.

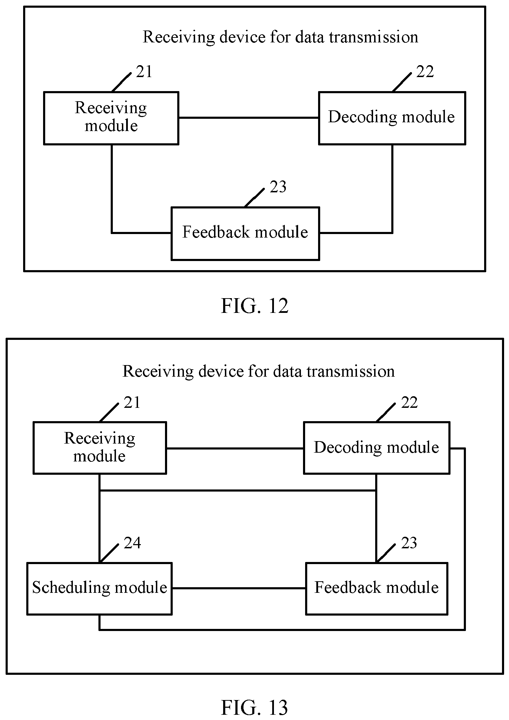

In some feasible implementations, referring to FIG. 12, FIG. 12 is another schematic structural diagram of a receiving device according to an embodiment of the present invention. The receiving device further includes:
a feedback module 23, configured to feed back a receiving status of receiving, by the receiving module, the data of the code block to the sending device in a preset feedback manner, where
the feedback manner includes at least one of the following: performing feedback once after data is received each time, and performing feedback once after data is received for K times; and
K is a natural number greater than 1 and not greater than M.

In some feasible implementations, referring to FIG. 13, FIG. 13 is another schematic structural diagram of a receiving device according to an embodiment of the present invention. The receiving device is a base station, and the sending device is UE; and
the receiving device further includes:
a scheduling module 24, configured to: calculate the first TBS, and obtain the second TBS from the pre-defined TBS set based on the first TBS, where an absolute value of a difference between the second TBS and the first TBS is the smallest in the pre-defined TBS set, or the second TBS is greater than the first TBS and a difference between the second TBS and the first TBS is the smallest in the pre-defined TBS set, or the second TBS is less than the first TBS and a difference between the second TBS and the first TBS is the smallest in the pre-defined TBS set; and
determine, based on the second TBS and a size of the scheduled data of the code block, a quantity M of scheduling times that is required to schedule the data of the code block based on the second TBS, and continually send M pieces of scheduling information to the UE within a preset time interval.

In some feasible implementations, the scheduling module 24 is specifically configured to:
calculate the first TBS based on a pre-defined data transmission bit rate and a quantity of to-be-scheduled resource blocks RBs, where the pre-defined data transmission bit rate is the bit rate corresponding to the first TBS; or
search a pre-defined TBS lookup table for a target TBS based on a modulation and coding scheme MCS index for data transmission and a quantity of to-be-scheduled RBs, and increase the target TBS to N times the size of the target TBS to obtain the first TBS, where a bit rate corresponding to the target TBS is less than 1, and N is a positive real number that makes the bit rate corresponding to the first TBS greater than or equal to 1.

In some feasible implementations, the scheduling information is used to trigger the UE to send the data of the code block to the base station, where
the scheduling information carries the quantity of to-be-scheduled RBs and at least one piece of the following information: the pre-defined data transmission bit rate and the MCS index for data transmission.

In some feasible implementations, a frame structure used for data transmission between the receiving device and the sending device is a frame structure having a short transmission time interval short TTI, where
in the frame structure having a short TTI, a quantity of symbols included in each TTI is any one of 1, 2, 3, 4, or 7.

In specific implementation, the receiving device may be specifically a base station in uplink data transmission, or UE in downlink data transmission. The receiving device may perform a corresponding implementation by using the modules included in the receiving device. For a specific implementation, refer to the implementations described in the steps in the foregoing embodiments. Details are not described herein again.

In this embodiment of the present invention, the receiving device may receive the data that is in the different locations in the same code block and that is transmitted by the sending device for a plurality of times by using a high bit rate, and may perform HARQ combining and decoding on the data of the same code block that is transmitted for a plurality of times, to ensure correct demodulation and decoding of the data when the data is transmitted by using the high bit rate. In this way, a time diversity gain and an encoding gain are obtained, transmission quality of data of the code block is ensured, and spectrum efficiency of a data system is improved.

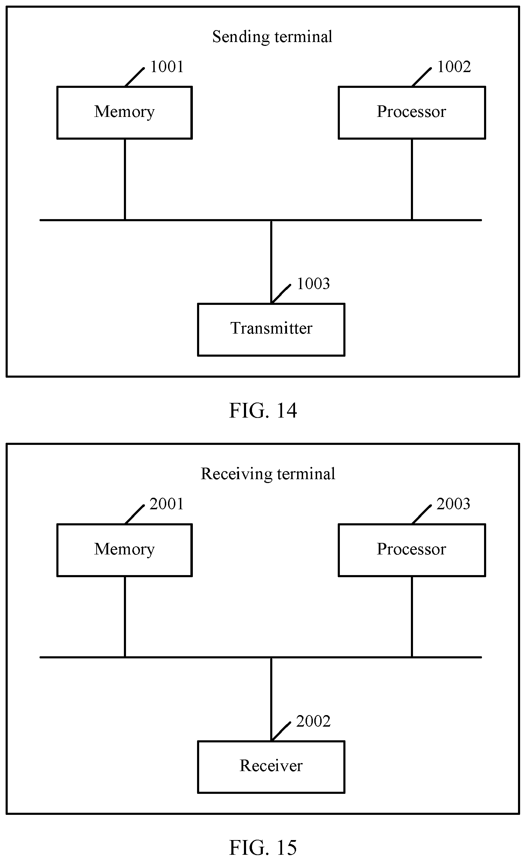

Referring to FIG. 14, FIG. 14 is a schematic structural diagram of an embodiment of a sending terminal according to an embodiment of the present invention. The sending terminal described in this embodiment of the present invention includes: a memory 1001, a processor 1002, and a transmitter 1003. The memory 1001, the transmitter 1003, and the processor 1002 are connected, where
the memory 1001 is configured to store a set of program code; and
the processor 1002 and the transmitter 1003 are configured to invoke the program code stored in the memory, to perform the following operations:
the processor 1002 is configured to obtain a first transport block size TBS, where a bit rate corresponding to the first TBS is greater than or equal to 1;
the processor 1002 is further configured to obtain, based on the first TBS, a second TBS from a pre-defined TBS set stored in the memory, where an absolute value of a difference between the second TBS and the first TBS is the smallest in the pre-defined TBS set, or the second TBS is greater than or equal to the first TBS and a difference between the second TBS and the first TBS is the smallest in the pre-defined TBS set, or the second TBS is less than or equal to the first TBS and a difference between the second TBS and the first TBS is the smallest in the pre-defined TBS set;
the processor 1002 is further configured to obtain data in at least two different locations in a same code block based on the second TBS; and
the transmitter 1003 is configured to send the data that is in the at least two different locations in the same code block and that is obtained by the processor to a receiving terminal, so that the receiving terminal performs hybrid automatic repeat request HARQ combining and decoding on the data in the at least two different locations.

In some feasible implementations, the sending terminal is a base station, and the receiving terminal is user equipment UE; and
the processor 1002 is specifically configured to:
calculate the first TBS based on a pre-defined data transmission bit rate and a quantity of to-be-scheduled resource blocks RBs that are stored in the memory, where
the pre-defined data transmission bit rate is the bit rate corresponding to the first TBS.

In some feasible implementations, the sending terminal is a base station, and the receiving terminal is UE; and
the processor 1002 is specifically configured to:
search a pre-defined TBS lookup table for a target TBS based on a modulation and coding scheme MCS index for data transmission and a quantity of to-be-scheduled RBs, where a bit rate corresponding to the target TBS is less than 1; and
increase the target TBS to N times the size of the target TBS to obtain the first TBS, where N is a positive real number that makes the bit rate corresponding to the first TBS greater than or equal to 1.

In some feasible implementations, the sending terminal is UE, and the receiving terminal is a base station; and
the processor 1002 is specifically configured to:
receive scheduling information of the base station, and obtain the first TBS based on the scheduling information.

In some feasible implementations, the scheduling information carries a pre-defined data transmission bit rate and a quantity of to-be-scheduled RBs; and
the processor 1002 is specifically configured to:
calculate the first TBS based on the pre-defined bit rate and the quantity of RBs.

In some feasible implementations, the scheduling information carries an MCS index for data transmission and a quantity of to-be-scheduled RBs; and
the processor 1002 is specifically configured to:
search a pre-defined TBS lookup table for a target TBS based on the MCS index and the quantity of to-be-scheduled RBs, where a bit rate corresponding to the target TBS is less than 1; and
increase the target TBS to N times the size of the target TBS to obtain the first TBS, where N is a positive real number that makes the bit rate corresponding to the first TBS greater than or equal to 1.

In some feasible implementations, the processor 1002 is specifically configured to:
determine, based on the second TBS and a size of the scheduled data of the code block, a quantity of transmission times that is required to transmit the code block to the receiving terminal based on the second TBS, where the quantity of transmission times is greater than 1;
determine, based on the size of the data of the code block and the quantity of transmission times, a redundancy version used in each transmission;
determine, based on the redundancy version used in each transmission, a location that is of data to be transmitted each time and that is in the code block; and
obtain, based on the location that is of the data to be transmitted each time and that is in the code block, the data to be transmitted each time; and
the transmitter is specifically configured to:
   send the data to be transmitted each time that is obtained by the processor to the receiving terminal.

In some feasible implementations, the sending device is UE, and the receiving device is a base station; and
the processor 1002 is specifically configured to:
continually receive M pieces of scheduling information of the base station within a preset time interval, where
the M pieces of scheduling information are scheduling information that is sent to the UE by the base station after the base station determines, based on the second TBS and a size of the scheduled data of the code block, a quantity M of scheduling times that is required to schedule the data of the code block based on the second TBS, and M is greater than 1.

In some feasible implementations, a frame structure used for data transmission between the sending terminal and the receiving terminal is a frame structure having a short transmission time interval short TTI, where
in the frame structure having a short TTI, a quantity of symbols included in each TTI is any one of 1, 2, 3, 4, or 7.

In specific implementation, the sending terminal may be specifically UE in uplink data transmission, or a base station in downlink data transmission. The sending terminal may perform a corresponding implementation by using the modules included in the sending terminal. For a specific implementation, refer to the implementations described in the steps in the foregoing embodiments. Details are not described herein again.

Referring to FIG. 15, FIG. 15 is a schematic structural diagram of an embodiment of a receiving terminal according to an embodiment of the present invention. The receiving terminal described in this embodiment of the present invention includes: a memory 2001, a receiver 2002, and a processor 2003. The memory 2001, the receiver 2002, and the processor 2003 are connected, where
the memory 2001 is configured to store a set of program code; and
the receiver 2002 and the processor 2003 are configured to invoke the program code stored in the memory, to perform the following operations:
the receiver 2002 is configured to receive data of a same code block that is sent by a sending terminal at least twice based on a second transport block size TBS, where the data of the same code block that is sent at least twice is data in different locations in the code block, and the second TBS is obtained from a pre-defined TBS set based on a first TBS corresponding to a bit rate greater than or equal to 1; and
the processor 2003 is configured to perform hybrid automatic repeat request HARQ combining and decoding on the data that is in the different locations in the code block and that is received by the receiver.

In some feasible implementations, the processor 2003 is further configured to:
feed back a receiving status of the data of the code block to the sending terminal in a preset feedback manner, where
the feedback manner includes at least one of the following: performing feedback once after data is received each time, and performing feedback once after data is received for K times; and
K is a natural number greater than 1 and not greater than M.

In some feasible implementations, the receiving terminal is a base station, and the sending terminal is UE; and
the processor 2003 is further configured to:
calculate the first TBS, and obtain the second TBS from the pre-defined TBS set based on the first TBS, where an absolute value of a difference between the second TBS and the first TBS is the smallest in the pre-defined TBS set, or the second TBS is greater than the first TBS and a difference between the second TBS and the first TBS is the smallest in the pre-defined TBS set, or the second TBS is less than the first TBS and a difference between the second TBS and the first TBS is the smallest in the pre-defined TBS set; and
determine, based on the second TBS and a size of the scheduled data of the code block, a quantity M of scheduling times that is required to schedule the data of the code block based on the second TBS, and continually send M pieces of scheduling information to the UE within a preset time interval.

In some feasible implementations, the processor 2003 is specifically configured to:
calculate the first TBS based on a pre-defined data transmission bit rate and a quantity of to-be-scheduled resource blocks RBs, where the pre-defined data transmission bit rate is the bit rate corresponding to the first TBS; or
search a pre-defined TBS lookup table for a target TBS based on a modulation and coding scheme MCS index for data transmission and a quantity of to-be-scheduled RBs, and increase the target TBS to N times the size of the target TBS to obtain the first TBS, where a bit rate corresponding to the target TBS is less than 1, and N is a positive real number that makes the bit rate corresponding to the first TBS greater than or equal to 1.

In some feasible implementations, the scheduling information is used to trigger the UE to send the data of the code block to the base station, where
the scheduling information carries the quantity of to-be-scheduled RBs and at least one piece of the following information: the pre-defined data transmission bit rate and the MCS index for data transmission.

In some feasible implementations, a frame structure used for data transmission between the receiving terminal and the sending terminal is a frame structure having a short transmission time interval short TTI, where
in the frame structure having a short TTI, a quantity of symbols included in each TTI is any one of 1, 2, 3, 4, or 7.

In specific implementation, the receiving terminal may be specifically a base station in uplink data transmission, or UE in downlink data transmission. The receiving terminal may perform a corresponding implementation by using the modules included in the receiving terminal. For a specific implementation, refer to the implementations described in the steps in the foregoing embodiments. Details are not described herein again.

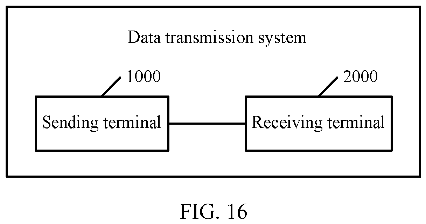

Referring to FIG. 16, FIG. 16 shows a data transmission system according to an embodiment of the present invention. The system may include: a sending terminal 1000 and a receiving terminal 2000 that are described in the embodiments of the present invention. For an implementation of data transmission between the sending terminal 1000 and the receiving terminal 2000, refer to the implementations described in the steps in the foregoing embodiments. Details are not described herein again.

A person of ordinary skill in the art can understand that all or some of the processes of the methods in the embodiments may be implemented by a computer program instructing relevant hardware. The program may be stored in a computer readable storage medium. When the program runs, the processes of the method embodiments may be included. The foregoing storage medium may include: a magnetic disk, an optical disc, a read-only memory (Read-Only Memory, ROM), a random access memory (Random Access Memory, RAM), or the like.

What are disclosed above are merely examples of embodiments of the present invention, and certainly are not intended to limit the scope of the claims of the present invention. Therefore, equivalent variations made in accordance with the claims of the present invention shall fall within the scope of the present invention.

## Claims

1. A data transmission method, comprising:
obtaining, by a sending device, a first transport block size TBS, wherein a bit rate corresponding to the first TBS is greater than or equal to 1;
obtaining, by the sending device, a second TBS from a pre-defined TBS set based on the first TBS, wherein an absolute value of a difference between the second TBS and the first TBS is the smallest in the pre-defined TBS set, or the second TBS is greater than or equal to the first TBS and a difference between the second TBS and the first TBS is the smallest in the pre-defined TBS set, or the second TBS is less than or equal to the first TBS and a difference between the second TBS and the first TBS is the smallest in the pre-defined TBS set; and
obtaining, by the sending device, data in at least two different locations in a same code block based on the second TBS, and sending the data to a receiving device, so that the receiving device performs hybrid automatic repeat request HARQ combining and decoding on the data in the at least two different locations.

2. The method according to claim 1, wherein the sending device is a base station, and the receiving device is user equipment UE; and
the obtaining, by a sending device, a first TBS comprises:
calculating, by the base station, the first TBS based on a pre-defined data transmission bit rate and a quantity of to-be-scheduled resource blocks RBs, wherein
the pre-defined data transmission bit rate is the bit rate corresponding to the first TBS.

3. The method according to claim 1, wherein the sending device is a base station, and the receiving device is UE; and
the obtaining, by a sending device, a first TBS comprises:
searching, by the base station, a pre-defined TBS lookup table for a target TBS based on a modulation and coding scheme MCS index for data transmission and a quantity of to-be-scheduled RBs, wherein a bit rate corresponding to the target TBS is less than 1; and
increasing, by the base station, the target TBS to N times the size of the target TBS to obtain the first TBS, wherein N is a positive real number that makes the bit rate corresponding to the first TBS greater than or equal to 1.

4. The method according to claim 1, wherein the sending device is UE, and the receiving device is a base station; and
the obtaining, by a sending device, a first TBS comprises:
receiving, by the UE, scheduling information of the base station; and
obtaining, by the UE, the first TBS based on the scheduling information.

5. The method according to claim 4, wherein the scheduling information carries a pre-defined data transmission bit rate and a quantity of to-be-scheduled RBs; and
the obtaining, by the UE, the first TBS based on the scheduling information comprises:
calculating, by the UE, the first TBS based on the pre-defined bit rate and the quantity of RBs.

6. The method according to claim 4, wherein the scheduling information carries an MCS index for data transmission and a quantity of to-be-scheduled RBs; and
the obtaining, by the UE, the first TBS based on the scheduling information comprises:
searching, by the UE, a pre-defined TBS lookup table for a target TBS based on the MCS index and the quantity of to-be-scheduled RBs, wherein a bit rate corresponding to the target TBS is less than 1; and
increasing, by the UE, the target TBS to N times the size of the target TBS to obtain the first TBS, wherein N is a positive real number that makes the bit rate corresponding to the first TBS greater than or equal to 1.

7. The method according to any one of claims 1 to 6, wherein the obtaining, by the sending device, data in at least two different locations in a code block based on the second TBS, and sending the data to a receiving device comprises:
determining, by the sending device based on the second TBS and a size of the scheduled data of the code block, a quantity of transmission times that is required to transmit the code block to the receiving device based on the second TBS, wherein the quantity of transmission times is greater than 1;
determining, by the sending device based on the size of the data of the code block and the quantity of transmission times, a redundancy version used in each transmission;
determining, by the sending device based on the redundancy version used in each transmission, a location that is of data to be transmitted each time and that is in the code block;
obtaining, by the sending device based on the location that is of the data to be transmitted each time and that is in the code block, the data to be transmitted each time; and
sending, by the sending device to the receiving device, the data to be transmitted each time.

8. The method according to claim 4, wherein the sending device is UE, and the receiving device is a base station; and
the receiving, by the UE, scheduling information of the base station comprises:
continually receiving, by the UE, M pieces of scheduling information of the base station within a preset time interval, wherein
the M pieces of scheduling information are scheduling information that is sent to the UE by the base station after the base station determines, based on the second TBS and a size of the scheduled data of the code block, a quantity M of scheduling times that is required to schedule the data of the code block based on the second TBS, and M is greater than 1.

9. The method according to any one of claims 1 to 8, wherein a frame structure used for data transmission between the sending device and the receiving device is a frame structure having a short transmission time interval short TTI, wherein
in the frame structure having a short TTI, a quantity of symbols comprised in each TTI is any one of 1, 2, 3, 4, or 7.

10. A data transmission method, comprising:
receiving, by a receiving device, data of a same code block that is sent by a sending device at least twice based on a second transport block size TBS, wherein the data of the same code block that is sent at least twice is data in different locations in the code block, and the second TBS is obtained from a pre-defined TBS set based on a first TBS corresponding to a bit rate greater than or equal to 1; and
performing, by the receiving device, hybrid automatic repeat request HARQ combining and decoding on the received data in the different locations in the code block.

11. The method according to claim 10, wherein after the receiving, by a receiving device, data of a same code block that is sent by a sending device at least twice based on a second TBS, the method further comprises:
feeding back, by the receiving device, a receiving status of the data of the code block to the sending device in a preset feedback manner, wherein
the feedback manner comprises at least one of the following: performing feedback once after data is received each time, and performing feedback once after data is received for K times; and
K is a natural number greater than 1 and not greater than M.

12. The method according to claim 10 or 12, wherein the receiving device is a base station, and the sending device is UE; and
before the receiving, by a receiving device, data of a same code block that is sent by a sending device at least twice based on a second TBS, the method further comprises:
calculating, by the base station, the first TBS, and obtaining the second TBS from the pre-defined TBS set based on the first TBS, wherein an absolute value of a difference between the second TBS and the first TBS is the smallest in the pre-defined TBS set, or the second TBS is greater than the first TBS and a difference between the second TBS and the first TBS is the smallest in the pre-defined TBS set, or the second TBS is less than the first TBS and a difference between the second TBS and the first TBS is the smallest in the pre-defined TBS set; and
determining, by the base station based on the second TBS and a size of the scheduled data of the code block, a quantity M of scheduling times that is required to schedule the data of the code block based on the second TBS, and continually sending M pieces of scheduling information to the UE within a preset time interval.

13. The method according to claim 12, wherein the calculating, by the base station, the first TBS comprises:
calculating, by the base station, the first TBS based on a pre-defined data transmission bit rate and a quantity of to-be-scheduled resource blocks RBs, wherein the pre-defined data transmission bit rate is the bit rate corresponding to the first TBS; or
searching, by the base station, a pre-defined TBS lookup table for a target TBS based on a modulation and coding scheme MCS index for data transmission and a quantity of to-be-scheduled RBs, and increasing the target TBS to N times the size of the target TBS to obtain the first TBS, wherein a bit rate corresponding to the target TBS is less than 1, and N is a positive real number that makes the bit rate corresponding to the first TBS greater than or equal to 1.

14. The method according to claim 13, wherein the scheduling information is used to trigger the UE to send the data of the code block to the base station; and
the scheduling information carries the quantity of to-be-scheduled RBs and at least one piece of the following information: the pre-defined data transmission bit rate and the MCS index for data transmission.

15. The method according to any one of claims 10 to 14, wherein a frame structure used for data transmission between the receiving device and the sending device is a frame structure having a short transmission time interval short TTI, wherein
in the frame structure having a short TTI, a quantity of symbols comprised in each TTI is any one of 1, 2, 3, 4, or 7.

16. A sending device for data transmission, comprising:
a first obtaining module, configured to obtain a first transport block size TBS, wherein a bit rate corresponding to the first TBS is greater than or equal to 1;
a second obtaining module, configured to obtain a second TBS from a pre-defined TBS set based on the first TBS obtained by the first obtaining module, wherein an absolute value of a difference between the second TBS and the first TBS is the smallest in the pre-defined TBS set, or the second TBS is greater than or equal to the first TBS and a difference between the second TBS and the first TBS is the smallest in the pre-defined TBS set, or the second TBS is less than or equal to the first TBS and a difference between the second TBS and the first TBS is the smallest in the pre-defined TBS set; and
a sending module, configured to: obtain data in at least two different locations in a same code block based on the second TBS obtained by the second obtaining module, and send the data to a receiving device, so that the receiving device performs hybrid automatic repeat request HARQ combining and decoding on the data in the at least two different locations.

17. The sending device according to claim 16, wherein the sending device is a base station, and the receiving device is user equipment UE; and
the first obtaining module is specifically configured to:
calculate the first TBS based on a pre-defined data transmission bit rate and a quantity of to-be-scheduled resource blocks RBs, wherein
the pre-defined data transmission bit rate is the bit rate corresponding to the first TBS.

18. The sending device according to claim 16, wherein the sending device is a base station, and the receiving device is UE; and
the first obtaining module is specifically configured to:
search a pre-defined TBS lookup table for a target TBS based on a modulation and coding scheme MCS index for data transmission and a quantity of to-be-scheduled RBs, wherein a bit rate corresponding to the target TBS is less than 1; and
increase the target TBS to N times the size of the target TBS to obtain the first TBS, wherein N is a positive real number that makes the bit rate corresponding to the first TBS greater than or equal to 1.

19. The sending device according to claim 16, wherein the sending device is UE, and the receiving device is a base station; and
the first obtaining module is specifically configured to:
receive scheduling information of the base station, and obtain the first TBS based on the scheduling information.

20. The sending device according to claim 19, wherein the scheduling information carries a pre-defined data transmission bit rate and a quantity of to-be-scheduled RBs; and
the first obtaining module is specifically configured to:
calculate the first TBS based on the pre-defined bit rate and the quantity of RBs.

21. The sending device according to claim 19, wherein the scheduling information carries an MCS index for data transmission and a quantity of to-be-scheduled RBs; and
the first obtaining module is specifically configured to:
search a pre-defined TBS lookup table for a target TBS based on the MCS index and the quantity of to-be-scheduled RBs, wherein a bit rate corresponding to the target TBS is less than 1; and
increase the target TBS to N times the size of the target TBS to obtain the first TBS, wherein N is a positive real number that makes the bit rate corresponding to the first TBS greater than or equal to 1.

22. The sending device according to any one of claims 16 to 21, wherein the sending module is specifically configured to:
determine, based on the second TBS and a size of the scheduled data of the code block, a quantity of transmission times that is required to transmit the code block to the receiving device based on the second TBS, wherein the quantity of transmission times is greater than 1;
determine, based on the size of the data of the code block and the quantity of transmission times, a redundancy version used in each transmission;
determine, based on the redundancy version used in each transmission, a location that is of data to be transmitted each time and that is in the code block;
obtain, based on the location that is of the data to be transmitted each time and that is in the code block, the data to be transmitted each time; and
send, to the receiving device, the data to be transmitted each time.

23. The sending device according to claim 19, wherein the sending device is UE, and the receiving device is a base station; and
the first obtaining module is specifically configured to:
continually receive M pieces of scheduling information of the base station within a preset time interval, wherein
the M pieces of scheduling information are scheduling information that is sent to the UE by the base station after the base station determines, based on the second TBS and a size of the scheduled data of the code block, a quantity M of scheduling times that is required to schedule the data of the code block based on the second TBS, and M is greater than 1.

24. The sending device according to any one of claims 16 to 23, wherein a frame structure used for data transmission between the sending device and the receiving device is a frame structure having a short transmission time interval short TTI, wherein
in the frame structure having a short TTI, a quantity of symbols comprised in each TTI is any one of 1, 2, 3, 4, or 7.

25. A receiving device for data transmission, comprising:
a receiving module, configured to receive data of a same code block that is sent by a sending device at least twice based on a second transport block size TBS, wherein the data of the same code block that is sent at least twice is data in different locations in the code block, and the second TBS is obtained from a pre-defined TBS set based on a first TBS corresponding to a bit rate greater than or equal to 1; and
a decoding module, configured to perform hybrid automatic repeat request HARQ combining and decoding on the data that is in the different locations in the code block and that is received by the receiving module.

26. The receiving device according to claim 25, wherein the receiving device further comprises:
a feedback module, configured to feed back a receiving status of receiving, by the receiving module, the data of the code block to the sending device in a preset feedback manner, wherein
the feedback manner comprises at least one of the following: performing feedback once after data is received each time, and performing feedback once after data is received for K times; and
K is a natural number greater than 1 and not greater than M.

27. The receiving device according to claim 25 or 26, wherein the receiving device is a base station, and the sending device is UE; and
the receiving device further comprises:
a scheduling module, configured to: calculate the first TBS, and obtain the second TBS from the pre-defined TBS set based on the first TBS, wherein an absolute value of a difference between the second TBS and the first TBS is the smallest in the pre-defined TBS set, or the second TBS is greater than the first TBS and a difference between the second TBS and the first TBS is the smallest in the pre-defined TBS set, or the second TBS is less than the first TBS and a difference between the second TBS and the first TBS is the smallest in the pre-defined TBS set; and
determine, based on the second TBS and a size of the scheduled data of the code block, a quantity M of scheduling times that is required to schedule the data of the code block based on the second TBS, and continually send M pieces of scheduling information to the UE within a preset time interval.

28. The receiving device according to claim 27, wherein the scheduling module is specifically configured to:
calculate the first TBS based on a pre-defined data transmission bit rate and a quantity of to-be-scheduled resource blocks RBs, wherein the pre-defined data transmission bit rate is the bit rate corresponding to the first TBS; or
search a pre-defined TBS lookup table for a target TBS based on a modulation and coding scheme MCS index for data transmission and a quantity of to-be-scheduled RBs, and increase the target TBS to N times the size of the target TBS to obtain the first TBS, wherein a bit rate corresponding to the target TBS is less than 1, and N is a positive real number that makes the bit rate corresponding to the first TBS greater than or equal to 1.

29. The receiving device according to claim 28, wherein the scheduling information is used to trigger the UE to send the data of the code block to the base station; and
the scheduling information carries the quantity of to-be-scheduled RBs and at least one piece of the following information: the pre-defined data transmission bit rate and the MCS index for data transmission.

30. The receiving device according to any one of claims 25 to 29, wherein a frame structure used for data transmission between the receiving device and the sending device is a frame structure having a short transmission time interval short TTI, wherein
in the frame structure having a short TTI, a quantity of symbols comprised in each TTI is any one of 1, 2, 3, 4, or 7.

31. A data transmission system, comprising: the sending device according to any one of claims 16 to 24, and the receiving device according to any one of claims 25 to 30.
